# EUROPÄISCHE PATENTANMELDUNG

(11) **EP 3 715 266 A1**
(43) Veröffentlichungstag der Anmeldung: **30.09.2020**
(21) Anmeldenummer: 20164308.7
(22) Anmeldetag: 19.03.2020
(51) Int. Cl.: B65B 9/02, B65B 55/20, B31D 5/00, B29C 65/18, B29C 65/24, B29C 65/30, B29L 31/00

(54) **FOLIENVERPACKUNGSMASCHINE UND VERFAHREN ZUM VERPACKEN EINES PACKGUTS**

(30) Priorität: 29.03.2019 DE 102019108254
(71) Anmelder: Beck Packautomaten GmbH & Co. KG, 72636 Frickenhausen (DE)
(72) Erfinder: Schumayer, Ulrich, 72622 Nürtingen (DE)
(74) Vertreter: Witte, Weller & Partner Patentanwälte mbB

(57) **Zusammenfassung**

Die vorliegende Erfindung betrifft eine Folienverpackungsmaschine (210, 210') zum Verpacken eines Packguts (212) mit einer aus einer ersten Folie (214) und einer zweiten Folie (216) erzeugten Umverpackung, wobei die Folienverpackungsmaschine (210, 210') eine Fördereinrichtung zum Fördern des Packguts (212) in einer Förderrichtung (T), eine Quertrennschweißvorrichtung (222) zum Verschweißen der Folien (214, 216) quer zu der Förderrichtung (T), eine erste Folienzuführeinrichtung (215) zum Zuführen der ersten Folie (214) in die Quertrennschweißvorrichtung (222), eine zweite Folienzuführeinrichtung (217) zum Zuführen der zweiten Folie (216) in die Quertrennschweißvorrichtung (222), und eine erste und eine zweite Längstrennschweißvorrichtung (224', 224") zum Verschweißen der Folien (214, 216) parallel zu der Förderrichtung (T) an zwei gegenüberliegenden Längsseiten aufweist, wobei die erste und/oder die zweite Folienzuführeinrichtung (215, 217) jeweils ein Luftpolsterfolienerzeugungssystem (280, 290) zum Erzeugen der jeweiligen ersten und/oder zweiten Folie (214, 216) als eine Luftpolsterfolie aufweist, wobei jedes Luftpolsterfolienerzeugungssystem (280, 290) eine Schweißrolleneinrichtung (18) aufweist, die dazu ausgebildet ist, die Luftpolsterfolie aus zwei aufeinanderliegenden Folienbahnen (282, 286; 292, 296) im Durchlaufbetrieb zu erzeugen. Des Weiteren betrifft die vorliegende Erfindung ein Verfahren (300) zum Verpacken eines Packguts (212) mit einer aus einer ersten Folie (214) und einer zweiten Folie (216) erzeugten Umverpackung.

## Beschreibung

Die vorliegende Erfindung betrifft eine Folienverpackungsmaschine zum Verpacken eines Packguts mit einer Umverpackung, die aus einer ersten Folie und einer zweiten Folie erzeugt wird, wobei die Folienverpackungsmaschine eine Fördereinrichtung zum Fördern des Packguts in einer Förderrichtung, eine Quertrennschweißvorrichtung zum Verschweißen der Folien quer zu der Förderrichtung, eine erste Folienzuführeinrichtung zum Zuführen der ersten Folie in die Quertrennschweißvorrichtung, eine zweite Folienzuführeinrichtung zum Zuführen der zweiten Folie in die Quertrennschweißvorrichtung, eine erste und eine zweite Längstrennschweißvorrichtung zum Verschweißen der Folien parallel zu der Förderrichtung an zwei gegenüberliegenden Längsseiten aufweist. Des Weiteren betrifft die vorliegende Erfindung ein Verfahren zum Verpacken eines Packguts.

Folienverpackungsmaschinen zum Verpacken eines Packguts mit einer Umverpackung, insbesondere Folienverpackungsmaschinen, bei denen die Umverpackung aus zwei verschweißten Folien besteht, sind im Stand der Technik allgemein bekannt.

Folienverpackungsmaschinen dienen dazu, Packgüter in eine Folienumverpackung einzuhüllen. Bei den Packgütern kann es sich um Konsumartikel wie beispielsweise Bücher oder CDs handeln, aber auch um Zeitschriften oder Textilien. Neben Banderoliermaschinen wird bei den Folienverpackungsmaschinen zwischen zwei verschiedenen Typen unterschieden. Zum einen existieren sogenannte Serienpackmaschinen und zum anderen sogenannte Formschultermaschinen.

Bei den Formschultermaschinen wird zunächst aus einer Folienbahn mittels einer Formschulter ein Halbschlauch gelegt, in den das Packgut einfährt. Mittels einer Quertrennschweißvorrichtung, die quer zu einer Transportrichtung des Packguts verläuft, wird der Halbschlauch vor und hinter dem Packgut verschweißt und durchtrennt. Mittels einer Längstrennschweißvorrichtung wird die offene Seite des Halbschlauches verschweißt und ein seitlicher Folienüberstand abgetrennt.

Bei den sog. Serienpackmaschinen werden eine obere und eine untere Folienbahn an das Packgut herangefahren und ebenfalls mittels einer Quertrennschweißvorrichtung und einer Längstrennschweißvorrichtung verschweißt und die seitlichen Folienüberstände abgetrennt. Bei den Serienpackmaschinen sind beide Längsseiten der Folienbahnen miteinander zu verschweißen und abzutrennen.

Während die Quertrennschweißvorrichtungen in der Regel nach Art einer Stanze ausgebildet sind, d.h. ein Oberstempel und ein Unterstempel werden zusammengefahren und durchtrennen die zwischen den Stempeln befindlichen Folienbahnen, handelt es sich bei den Längstrennschweißvorrichtungen um feststehende oder rotierende Trennschwei-ßeinrichtungen, durch die die Folienbahnen hindurchgefördert werden.

Beispielsweise zeigen die Druckschriften DE 10 2015 122 560 A1 und DE 10 2012 103 352 A1 derartige Folienverpackungsmaschinen.

Als Folien für die Umverpackung können beispielsweise Luftpolsterfolien verwendet werden. Unter dem Begriff "Luftpolsterfolie" versteht man im Allgemeinen eine Folienanordnung die zur Polsterung, beispielsweise zur Polsterung von Verpackungsgüter, geeignet ist. In der Regel bestehen derartige Luftpolsterfolien aus mindestens zwei Folienschichten. Die Folienschichten sind miteinander verbunden, insbesondere miteinander verklebt oder verschweißt. Zwischen diesen Folienschichten sind Luftkammern bzw. Lufteinschlüsse angeordnet, die die Polsterung ausbilden. Diese Luftkammern können entweder als Noppen bzw. Blasen oder als Luftschläuche bzw. Luftkissen ausgebildet sein.

Unter anderem können Luftpolsterfolien in Folienverpackungsmaschinen dazu verwendet werden, Folienumverpackungen für alle Arten von Verpackungsgütern zu erzeugen. Beispielsweise werden Datenträger wie DVDs oder CDs regelmäßig in Folie verpackt vertrieben. Aber auch Zeitungen mit Beilegern, Bücher, Ersatzteile oder alle Arten von in Supermärkten vertriebenen Artikeln werden für gewöhnlich mit einer Folienumverpackung versehen. Die Verwendung von Luftpolsterfolien bei derartigen Verpackungsgütern hat den Vorteil, dass die Verpackungsgüter stoßunempfindlich verpackt werden können. Dadurch kann ein sicherer Transport der Verpackungsgüter gewährleistet werden.

Systeme und Verfahren zum Erzeugen solcher Luftpolsterfolien sind im Stand der Technik allgemein bekannt.

Beispielsweise zeigt die Druckschrift EP 1 477 299 A1 ein Verfahren zur Herstellung einer Polypropylen-Luftblasenfolie. Die Polypropylen-Luftblasenfolie umfasst eine erste und eine zweite Folienkomponente. Die erste Folienkomponente wird mittels eines Formzylinders unter Vakuum thermogeformt, um zylindrische oder konische Vertiefungen zu erzeugen. Die zweite Folienkomponente ist flach und wird auf die erste Folie mittels eines Schweißzylinders aufgeschweißt.

Des Weiteren zeigt die Druckschrift DE 199 13 408 C2, dass bei einem Kunststoffschlauch zur Herstellung gasgefüllter Füllkörper, mit zwei übereinanderliegenden Folien, die an einem ersten ihrer Längsränder gasdicht miteinander verbunden sind, die Oberfolie und die Unterfolie zur Ausbildung aufblasbarer Taschen in Querrichtung durch mit Abstand zueinander angeordnete Paare gasdichter Schweißnähte miteinander verschweißt sind, die sich von dem ersten Längsrand aus bis zu einer vorgegebenen Entfernung von dem gegenüberliegenden, zweiten Längsrand erstrecken. Die Taschen weisen jeweils eine vom zweiten Längsrand aus zugängliche Gas-Einfüllöffnung zwischen der Ober- und der Unterfolie auf, und zwischen den Schweißnähten jedes Schweißnahtpaares ist ein Zwischenraum vorhanden, in dem eine Perforationsnaht ausgebildet ist, die sich vom ersten bis zum zweiten Längsrand erstreckt. Es wird auch ein Verfahren zur Herstellung gasgefüllter Füllkörper unter Verwendung solcher Kunststoffschläuche und eine Vorrichtung zur Durchführung des Verfahrens vorgeschlagen.

Die bekannten Systeme und Verfahren zum Erzeugen von Luftpolsterfolien lassen noch Raum für Verbesserungen. Insbesondere werden bei den bekannten Systeme und Verfahren die Luftpolsterfolien oder zumindest Teile der Luftpolsterfolie im Voraus erzeugt, so dass bekannte Folienverpackungsmaschinen lediglich Luftpolsterfolien zum Verschweißen verwenden können, diese aber nicht im Durchlaufbetrieb herstellen.

Es ist daher eine Aufgabe der vorliegenden Erfindung, eine verbesserte Vorrichtung, ein verbessertes System und ein verbessertes Verfahren zum Erzeugen einer Luftpolsterfolie vorzusehen, wobei die Luftpolsterfolie im Durchlaufbetrieb erzeugt werden kann.

Des Weiteren ist eine Aufgabe der vorliegenden Erfindung, eine verbesserte Vorrichtung, ein verbessertes System und ein verbessertes Verfahren zum Erzeugen einer Luftpolsterfolie vorzusehen, welche einfacher und kompakter ausgestaltet sind.

Des Weiteren ist eine Aufgabe der vorliegenden Erfindung, eine verbesserte Folienverpackungsmaschine und ein verbessertes Verfahren zum Verpacken eines Packguts vorzusehen, welche einfacher und kompakter ausgestaltet sind.

Gemäß einem ersten Aspekt der vorliegenden Erfindung wird Folienverpackungsmaschine zum Verpacken eines Packguts mit einer Umverpackung vorgeschlagen. Die Umverpackung wird aus einer ersten Folie und einer zweiten Folie erzeugt. Die Folienverpackungsmaschine weist eine Fördereinrichtung zum Fördern des Packguts in einer Förderrichtung, eine Quertrennschweißvorrichtung zum Verschweißen der Folien quer zu der Förderrichtung, eine erste Folienzuführeinrichtung zum Zuführen der ersten Folie in die Quertrennschweißvorrichtung, eine zweite Folienzuführeinrichtung zum Zuführen der zweiten Folie in die Quertrennschweißvorrichtung, und eine erste und eine zweite Längstrennschweißvorrichtung zum Verschweißen der Folien parallel zu der Förderrichtung an zwei gegenüberliegenden Längsseiten auf. Die erste und/oder die zweite Folienzuführeinrichtung weisen jeweils ein Luftpolsterfolienerzeugungssystem zum Erzeugen der jeweiligen ersten und/oder zweiten Folie als eine Luftpolsterfolie auf, wobei jedes Luftpolsterfolienerzeugungssystem eine Schweißrolleneinrichtung aufweist, die dazu ausgebildet ist, die Luftpolsterfolie aus zwei aufeinanderliegenden Folienbahnen im Durchlaufbetrieb zu erzeugen. In einer bevorzugten Ausgestaltung ist die Schweißrolleneinrichtung entsprechend dem dritten oder vierten Aspekt der vorliegenden Erfindung ausgestaltet. In einer weiteren bevorzugten Ausgestaltung ist das Luftpolsterfolienerzeugungssystem entsprechend dem System nach dem fünften Aspekt der vorliegenden Erfindung ausgestaltet.

Gemäß einem zweiten Aspekt der vorliegenden Erfindung wird Verfahren zum Verpacken eines Packguts mit einer aus einer ersten Folie und einer zweiten Folie erzeugten Umverpackung vorgeschlagen. Das Packgut wird mittels einer Fördereinrichtung in einer Förderrichtung gefördert. Das Verfahren weist die folgenden Schritte auf:
- Erzeugen der ersten Folie als Luftpolsterfolie aus zwei aufeinanderliegenden Folienbahnen im Durchlaufbetrieb mittels einer Schweißrolleneinrichtung eines ersten Luftpolsterfolienerzeugungssystem;
- Zuführen der ersten Folie in eine Quertrennschweißvorrichtung mittels einer ersten Folienzuführeinrichtung und Zuführen der zweiten Folie mittels einer zweiten Folienzuführeinrichtung in die Quertrennschweißvorrichtung, wobei die erste Folienzuführeinrichtung das erste Luftpolsterfolienerzeugungssystem aufweist;
- Quertrennschweißen der ersten und zweiten Folie quer zu der Förderrichtung mittels der Quertrennschweißvorrichtung;
- Längstrennschweißen der ersten und zweiten Folie parallel zu der Förderrichtung an zwei gegenüberliegenden Längsseiten mittels einer ersten und einer zweiten Längstrennschweißvorrichtung.

In einer bevorzugten Ausgestaltung des Verfahrens wird in dem Schritt des Erzeugens die Luftpolsterfolie entsprechend dem Verfahren zum Erzeugen einer Luftpolsterfolie nach dem sechsten Aspekt der Erfindung erzeugt.

Erfindungsgemäß wird das Packgut mit einer Umverpackung verpackt. Die Umverpackung wird aus der ersten Folie und der zweiten Folie erzeugt. Die erste Folie ist beispielsweise eine obere Folie bzw. Oberfolie. Die zweite Folie ist beispielsweise eine untere Folie bzw. Unterfolie. Das Packgut wird zwischen der ersten und der zweiten Folie angeordnet. Die erste und die zweite Folie sind somit auf gegenüberliegenden Seiten des Packguts angeordnet. Die erste und die zweite Folie werden auf den Querseiten mittels der Quertrennschweißvorrichtung und auf den Längsseiten mittels der beiden Längstrennschweißvorrichtungen miteinander verschweißt, um die Umverpackung zu erzeugen. Das Packgut wird während des Verpackens mittels der Fördereinrichtung in der Förderrichtung gefördert. Die Richtungsangaben "quer" bzw. "längs" sind bezüglich der Förderrichtung zu verstehen.

Die beiden Folien, die zu Erzeugung der Umverpackung verwendet werden, werden mittels der jeweiligen Folienzuführeinrichtung in die Quertrennschweißvorrichtung zugeführt. Mindestens eine der beiden Folienzuführeinrichtungen ist dabei derart ausgebildet, dass sie im Durchlaufbetrieb die entsprechende Folie als Luftpolsterfolie erzeugt. Dazu weist diese Folienzuführeinrichtung ein Luftpolsterfolienerzeugungssystem mit einer Schweißrolleneinrichtung auf. Das Luftpolsterfolienerzeugungssystem erzeugt mittels der Schweißrolleneinrichtung die Luftpolsterfolie aus zwei aufeinanderliegenden Folienbahnen im Durchlaufbetrieb.

In anderen Worten wird die Luftpolsterfolie in der Folienverpackungsmaschine mittels des Luftpolsterfolienerzeugungssystems aus zwei Folienbahnen im Durchlaufbetrieb erzeugt und wird anschließend direkt im Verpackungsprozess, in dem das Packgut in der Umverpackung verpackt wird, zugeführt. Auf diese Weise ist es somit möglich, in einer Folienverpackungsmaschine aus zwei herkömmlichen Folienbahnen eine Luftpolsterfolie im Durchlaufbetrieb zu erzeugen und direkt zum verpacken eines Packguts zu verwenden. Dadurch wird eine Folienverpackungsmaschine bzw. ein Verfahren zum Verpacken eines Packguts mit einer Umverpackung in kompakter und einfacher Art und Weise bereitgestellt.

Gemäß einem dritten Aspekt der vorliegenden Erfindung wird eine Schweißrolleneinrichtung zum Erzeugen einer Luftpolsterfolie aus zwei aufeinanderliegenden Folienbahnen im Durchlaufbetrieb vorgeschlagen, wobei die Schweißrolleneinrichtung eine Innenwelle, eine um die Innenwelle angeordnete Außenwelle und eine Heizeinrichtung zum Beheizen der Innenwelle aufweist, wobei die Außenwelle und die Innenwelle eine gemeinsame Längsachse aufweisen, wobei sich die Längsachse in einer Längsrichtung erstreckt, wobei die Innenwelle feststehend angeordnet ist, wobei die Außenwelle um die Längsachse in einer Drehrichtung drehbar gelagert ist, wobei die Außenwelle eine Mehrzahl von äußeren Stegen aufweist, die sich bezüglich der Längsachse in einer radialen Richtung nach außen hin erstrecken, wobei die äußeren Stege in der Längsrichtung voneinander beabstandet sind, wobei die Außenwelle zwischen jeweils zwei benachbarten, äußeren Stegen jeweils eine äußere Aussparung aufweist, und wobei die Innenwelle derart ausgebildet ist, dass ein Wärmetransfer zwischen der Innenwelle und der Außenwelle in einem Bereich der äußeren Stege größer ist als in einem Bereich der äußeren Aussparungen.

Gemäß einem vierten Aspekt der vorliegenden Erfindung wird eine Schweißrolleneinrichtung zum Erzeugen einer Luftpolsterfolie aus zwei aufeinanderliegenden Folienbahnen im Durchlaufbetrieb vorgeschlagen, wobei die Schweißrolleneinrichtung eine Innenwelle, eine um die Innenwelle angeordnete Außenwelle und eine Heizeinrichtung zum Beheizen der Innenwelle aufweist, wobei die Außenwelle und die Innenwelle eine gemeinsame Längsachse aufweisen, wobei sich die Längsachse in einer Längsrichtung erstreckt, wobei die Innenwelle feststehend angeordnet ist, wobei die Außenwelle um die Längsachse in einer Drehrichtung drehbar gelagert ist, wobei die Außenwelle eine Mehrzahl von äußeren Stegen aufweist, die sich bezüglich der Längsachse in einer radialen Richtung nach außen hin erstrecken, wobei die äußeren Stege in der Längsrichtung voneinander beabstandet sind, wobei die Außenwelle zwischen jeweils zwei benachbarten, äußeren Stegen jeweils eine äußere Aussparung aufweist, wobei ein Abstand zwischen der Innenwelle und der Außenwelle in dem Bereich der äußeren Stege kleiner ist als in dem Bereich der äußeren Aussparungen, wobei ein Abstand zwischen der Innenwelle und der Außenwelle in dem Bereich der äußeren Stege kleiner ist als 0,5 µm ist, und wobei der Abstand zwischen der Innenwelle und der Außenwelle in dem Bereich der äußeren Aussparungen größer ist als 0,5 mm.

Gemäß einem fünften Aspekt der vorliegenden Erfindung wird ein System zum Erzeugen einer Luftpolsterfolie aus zwei aufeinanderliegenden Folienbahnen im Durchlaufbetrieb vorgeschlagen, in dem die beiden Folienbahnen in einer Transportrichtung bewegt werden, wobei das System eine Schweißrolleneinrichtung gemäß dem dritten oder vierten Aspekt der Erfindung und eine Düseneinrichtung zum Erzeugen eines Luftstroms zwischen den Folienbahnen in der Transportrichtung aufweist, wobei die Längsachse senkrecht zu der Transportrichtung angeordnet ist, und wobei die Düseneinrichtung zwischen den Folienbahnen angeordnet ist.

Gemäß einem sechsten Aspekt der vorliegenden Erfindung wird ein Verfahren zum Erzeugen einer Luftpolsterfolie aus zwei aufeinanderliegenden Folienbahnen im Durchlaufbetrieb vorgeschlagen, in dem die beiden Folienbahnen in einer Transportrichtung bewegt werden, wobei das Verfahren die folgenden Schritte aufweist:
- Anordnen zweier Schweißrolleneinrichtungen auf zwei gegenüberliegenden Seiten der Folienbahnen, so dass die Folienbahnen zwischen den Schweißrolleneinrichtungen hindurchlaufen, wobei jede Schweißrolleneinrichtung eine Innenwelle, eine um die Innenwelle angeordnete Außenwelle und eine Heizeinrichtung zum Beheizen der Innenwelle aufweist, wobei die Außenwelle und die Innenwelle eine gemeinsame Längsachse aufweisen, wobei sich die Längsachse in einer Längsrichtung erstreckt, wobei die Innenwelle feststehend angeordnet ist, wobei die Außenwelle um die Längsachse in einer Drehrichtung drehbar gelagert ist, wobei die Außenwelle eine Mehrzahl von äußeren Stegen aufweist, die sich bezüglich der Längsachse in einer radialen Richtung nach außen hin erstrecken, wobei die äußeren Stege in der Längsrichtung voneinander beabstandet sind, wobei die Außenwelle zwischen jeweils zwei benachbarten, äußeren Stegen jeweils eine äußere Aussparung aufweist, und wobei die Innenwelle derart ausgebildet ist, dass ein Wärmetransfer zwischen der Innenwelle und der Außenwelle in einem Bereich der äußeren Stege größer ist als in einem Bereich der äußeren Aussparungen, wobei die Längsachsen der beiden Innenwellen der Schweißrolleneinrichtungen parallel zueinander und senkrecht zu der Transportrichtung angeordnet sind, wobei die äußeren Stege der Schweißrolleneinrichtungen in der Längsrichtung korrespondierend zueinander angeordnet sind, so dass je zwei äußeren Stege und je zwei äußere Aussparungen gegenüberliegend zueinander angeordnet sind;
- Anordnen einer Düseneinrichtung zwischen den Folienbahnen, insbesondere wobei die Düseneinrichtung eine Mehrzahl von Düsen aufweist und die Düsen entlang der Längsrichtung angeordnet werden, so dass jeweils eine Düse in der Transportrichtung korrespondierend, insbesondere fluchtend, mit je zwei gegenüberliegenden äußeren Aussparungen der Schweißrolleneinrichtungen angeordnet ist;
- Erzeugen eines Luftstroms mittels der Düseneinrichtung zwischen den Folienbahnen in der Transportrichtung; und
- Verschweißen der Folienbahnen mittels der Schweißrolleneinrichtungen nur in dem Bereich der äußeren Stege, um die Luftpolsterfolie aus den Folienbahnen zu erzeugen.

Mittels der erfindungsgemäßen Schweißrolleneinrichtungen kann eine Luftpolsterfolie aus zwei aufeinanderliegenden Folienbahnen, allgemein als Oberfolie und Unterfolie bezeichnet, im Durchlaufbetrieb erzeugt werden. Der Begriff "Durchlaufbetrieb" ist dahingehend zu verstehen, dass die Luftpolsterfolie fortlaufend, insbesondere in einem zumindest teilweise kontinuierlichen Betrieb, erzeugt werden. In anderen Worten werden die zwei aufeinanderliegenden Folienbahnen im Betrieb fortlaufend an der Schweißrolleneinrichtung vorbeigeführt, um die Luftpolsterfolie zu erzeugen.

Zum Erzeugen der Luftpolsterfolie ist die Schweißrolleneinrichtung dazu ausgebildet, mittels eines Wärmetransfers auf eine der Folienbahnen die zwei aufeinanderliegenden Folienbahnen miteinander zu verschweißen. Dazu weist die Schweißrolleneinrichtung die Innenwelle, die Außenwelle und die Heizeinrichtung auf. Die zum Verschweißen benötigte Wärme wird von der Heizeinrichtung auf die Innenwelle und von der Innenwelle auf die Außenwelle übertragen. Die Heizeinrichtung kann beispielsweise eine Heizpatrone sein, die vorzugsweise in der Innenwelle angeordnet ist. Vorzugsweise kann die Innenwelle hohl ausgebildet sein, wobei sich die Heizpatronen zumindest teilweise durch die hohle Innenwelle hindurch erstreckt. Die Heizeinrichtung ist vorzugsweise dazu eingerichtet, die Innenwelle zumindest in einem Bereich bezüglich der Längsrichtung zu beheizen, der korrespondierend zu den äußeren Stegen der Außenwelle angeordnet ist.

Die zwei aufeinanderliegenden Folienbahnen werden fortlaufend an der Außenwelle vorbeigeführt und kommen im Betrieb in Kontakt mit der Außenwelle. Die Außenwelle ist derart ausgebildet, dass sie die beiden Folienbahnen nur in dem Bereich der äußeren Stege miteinander verschweißt. In anderen Worten ist die Schweißrolleneinrichtung dazu eingerichtet, mittels der äußeren Stege fortlaufende Schweißnähte in der Durchlaufrichtung der Folienbahnen, sprich der Transportrichtung der Folienbahnen, zu erzeugen. In dem Bereich der äußeren Aussparungen werden die aufeinanderliegenden Folienbahnen jedoch nicht miteinander verschweißt. Dadurch entsteht im Bereich jeder äußeren Aussparung jeweils eine fortlaufende Luftkammer bzw. ein fortlaufender Folienschlauch, wobei die Anzahl der fortlaufenden Folienschläuche der Anzahl der äußeren Aussparungen entspricht.

Die äußeren Stege und äußeren Aussparungen sind vorzugsweise ringförmig ausgebildet und erstrecken sich entlang der Drehrichtung um die Längsachse. Insbesondere können die äußeren Stege und äußeren Aussparungen bezüglich der Längsachse rotationssymmetrisch ausgebildet sein.

Zum Ausbilden bzw. Formen der Folienschläuche ist vorzugsweise die Düseneinrichtung vorgesehen. Die Düseneinrichtung erzeugt einen kontinuierlichen Luftstrom zwischen den Folienbahnen in der Transportrichtung. In anderen Worten bläst die Düseneinrichtung Luft in die Folienschläuche ein, um diese im Betrieb mit Luft zu füllen, wodurch die beiden Folienbahnen im Betrieb in dem Bereichen zwischen den erzeugten Schweißnähten voneinander beabstandet werden. Dazu kann beispielsweise die Düseneinrichtung eine Mehrzahl von Düsen aufweisen, die entlang der Längsrichtung angeordnet, so dass jeweils eine Düse in der Transportrichtung korrespondierend, insbesondere fluchtend, mit jeweils einer äußeren Aussparung der Schweißrolleneinrichtung angeordnet ist. Dadurch ist jede Düse auch fluchtend mit jeweils einem Folienschlauch angeordnet, so dass jede Düse Luft in den entsprechenden Folienschlauch einbläst.

Im Betrieb zum Erzeugen der Luftpolsterfolie erstreckt sich somit die der Schweißrolleneinrichtung zugewandte Folienbahn in die Aussparungen hinein, da die Folienbahnen im Bereich zwischen den Schweißnähten, also entsprechend auch in dem Bereich der äußeren Aussparungen, voneinander beabstandet werden. Um nun zu vermeiden, dass die der Schweißrolleneinrichtung zugewandte Folienbahnen, die sich die Aussparung hinein erstreckt, am Boden der Aussparungen anhaftet, insbesondere angeklebt, ist die Innenwelle derart ausgebildet, dass ein Wärmetransfer zwischen der Innenwelle und der Außenwelle in einem Bereich der äußeren Stege größer ist als in einem Bereich der äußeren Aussparungen. Dies wird beispielsweise dadurch erreicht, dass ein Abstand der Innenwelle zu der Außenwelle in dem Bereich der äußeren Stege kleiner ist als in einem Bereich der äußeren Aussparungen. In anderen Worten wird dadurch erreicht, dass die Außenwelle im Bereich der äußeren Stege wärmer ist als im Bereich der äußeren Aussparungen, insbesondere wärmer als am Boden der äußeren Aussparungen.

Mittels der erfindungsgemäßen Schweißrolleneinrichtung kann somit eine Luftpolsterfolie mit fortlaufenden Folienschläuchen, die nebeneinander angeordnet sind, im Durchlaufbetrieb erzeugt werden.

Als Material für die Folienbahnen kann jedes Folienmaterial verwendet werden, dass sich zum Verschweißen von Folienbahnen eignet. Es ist somit also nicht erforderlich, dass ein spezielles, beispielsweise ein thermoplastisch verformbares, Folienmaterial verwendet werden muss.

Des Weiteren ist der erfindungsgemäße Aufbau einfacher und kompakter, insbesondere platzsparende, als bekannte Vorrichtungen zum Erzeugen von Luftpolsterfolie, die beispielsweise Folienschläuche quer zu der Durchlaufrichtung bzw. Transportrichtung der Folienbahnen erzeugen.

Die eingangs gestellte Aufgabe wird somit vollumfänglich gelöst.

In einer ersten Ausgestaltung der vorliegenden Erfindung kann vorgesehen sein, dass jede ein Luftpolsterfolienerzeugungssystem aufweisende Folienzuführeinrichtung des Weiteren jeweils zwei Folienbahnzuführungen zum Zuführen der Folienbahnen in das jeweilige Luftpolsterfolienerzeugungssystem aufweist.

Die Folienbahnen zu Führungen können beispielsweise als Rollen ausgebildet sein auf denen die Folienbahnen aufgewickelt sind. Zum zuführen werden die Folienbahnen von den entsprechenden Rollen abgewickelt.

In einer weiteren Ausgestaltung der vorliegenden Erfindung kann vorgesehen sein, dass die Folienbahnen jedes Luftpolsterfolienerzeugungssystems jeweils in einer Transportrichtung bewegt werden, wobei jedes Luftpolsterfolienerzeugungssystem mittels der entsprechenden Schweißrolleneinrichtung dazu ausgebildet ist, die aufeinanderliegenden Folienbahnen miteinander zu verschweißen, so dass in der Transportrichtung verlaufende Luftschläuche erzeugt werden, die die Luftpolsterfolie ausbilden.

Die Transportrichtung der Folienbahnen entspricht der Bewegungsrichtung der Folienbahnen. Die Transportrichtung der Folienbahnen entspricht damit auch der Bewegungsrichtung der Luftpolsterfolie. Die Schweißrolleneinrichtung erzeugt Luftschläuche die parallel zueinander angeordnet sind und in der Transportrichtung verlaufen. Im Bereich der Quertrennschweißvorrichtung und der Längstrennschweißeinrichtungen entspricht die Transportrichtung der Förderrichtung der Folienverpackungsmaschine. Folglich verlaufen die erzeugten Luftschläuche während des Quertrennschweißens und des Längstrennschweißens in der Förderrichtung. Die Luftschläuche erstrecken sich somit bezüglich der Förderrichtung des Packguts in einer Längsrichtung.

In einer weiteren Ausgestaltung der vorliegenden Erfindung kann vorgesehen sein, dass die Quertrennschweißvorrichtung dazu ausgebildet ist, durch das Verschweißen der Folien quer zu der Förderrichtung die Luftschläuche der jeweiligen Luftpolsterfolie in der Transportrichtung zu verschließen.

Da sich die Luftschläuche, wie zuvor beschrieben, in der Transportrichtung und somit auch zumindest in dem Bereich der Quertrennschweißvorrichtung und der Längstrennschweißvorrichtungen in der Förderrichtung erstrecken bzw. verlaufen, werden die Luftschläuche durch die Quertrennschweißvorrichtung, die die Folien quer zu der Förderrichtung miteinander verschweißt, durch dieses verschweißen ebenfalls verschlossen. Auf diese Weise werden für die entsprechenden um Verpackungen des Packguts verschlossene Luftschläuche aus jeder Luftpolsterfolie gebildet, die sich in der Förderrichtung von am ersten Ende zu einem zweiten Ende der Umverpackung, insbesondere von einem ersten zu einem zweiten Längsende der Umverpackung, erstrecken.

In einer weiteren Ausgestaltung der vorliegenden Erfindung kann vorgesehen sein, dass jede Schweißrolleneinrichtung jedes Luftpolsterfolienerzeugungssystems eine Innenwelle, eine um die Innenwelle angeordnete Außenwelle und eine Heizeinrichtung zum Beheizen der Innenwelle aufweist, wobei die Außenwelle und die Innenwelle eine gemeinsame Längsachse aufweisen, wobei sich die Längsachse in einer Längsrichtung erstreckt, wobei die Innenwelle feststehend angeordnet ist, wobei die Außenwelle um die Längsachse in einer Drehrichtung drehbar gelagert ist, wobei die Außenwelle eine Mehrzahl von äußeren Stegen aufweist, die sich bezüglich der Längsachse in einer radialen Richtung nach außen hin erstrecken, wobei die äußeren Stege in der Längsrichtung voneinander beabstandet sind, wobei die Außenwelle zwischen jeweils zwei benachbarten, äußeren Stegen jeweils eine äußere Aussparung aufweist.

Auf diese Weise werden die Folienbahnen lediglich in dem Bereich der äußeren Stege miteinander verschweißt. Dadurch entstehen in der Transportrichtung Schweißnähte in den Bereichen der Folienbahnen, in denen die Folienbahnen an den Stegen vorbeigeführt werden bzw. in Anlage an den Stegen kommen, da nur in diesen Bereichen ein ausreichend großer Wärme Transfer zu den Folienbahnen durchgeführt wird, der zum Verschweißen der beiden Folienbahnen führt. Hierdurch werden insbesondere Luftschläuche erzeugt, die sich, wie zuvor bereits beschrieben, in der Transportrichtung erstrecken bzw. verlaufen. In anderen Worten werden im Durchlaufbetrieb, in dem die Folienbahnen fortlaufend an der Schweißrolleneinrichtung vorbeigeführt werden, fortlaufende Schweißnähte in der Transportrichtung erzeugt, die zur Ausbildung der Luftschläuche führen. Die Luftpolsterfolie wird durch die Luftschläuche ausgebildet.

In einer weiteren Ausgestaltung der vorliegenden Erfindung kann vorgesehen sein, dass die Folienbahnen jedes Luftpolsterfolienerzeugungssystems jeweils in einer Transportrichtung bewegt werden, wobei jedes Luftpolsterfolienerzeugungssystem jeweils zwei Schweißrolleneinrichtungen aufweist, wobei die Schweißrolleneinrichtungen auf gegenüberliegenden Seiten der entsprechenden Folienbahnen angeordnet sind, so dass die Folienbahnen zwischen den Schweißrolleneinrichtungen in der Transportrichtung hindurchlaufen, wobei die Längsachsen der beiden Innenwellen der Schweißrolleneinrichtungen parallel zueinander und senkrecht zu der Transportrichtung angeordnet sind, wobei jeweils zwei äußere Stege der Schweißrolleneinrichtungen gegenüberliegend zueinander angeordnet sind, insbesondere so dass sie die Folienbahnen zwischen sich verschweißen.

Durch die Verwendung von zwei Schweißrolleneinrichtungen wird ein gleichmäßiger Wärmeübertrag von beiden Seiten der Folienbahnen ermöglicht. Die Qualität der Schweißnähte wird somit verbessert. Des Weiteren können sich in dieser Ausgestaltung die Folienschläuche der Luftpolsterfolie sowohl in die äußeren Aussparungen der ersten Schweißrolleneinrichtung als auch in die äußeren Aussparungen der zweiten Schweißrolleneinrichtung erstrecken.

In einer weiteren Ausgestaltung der vorliegenden Erfindung kann vorgesehen sein, dass die Folienbahnen jedes Luftpolsterfolienerzeugungssystems jeweils in einer Transportrichtung bewegt werden, wobei jedes Luftpolsterfolienerzeugungssystems des Weiteren eine Düseneinrichtung zum Erzeugen eines Luftstroms zwischen den Folienbahnen in der Transportrichtung aufweist, und wobei die Düseneinrichtung zwischen den Folienbahnen angeordnet ist.

Die Düseneinrichtung erzeugt daher einen kontinuierlichen Luftstrom zwischen den Folienbahnen in der Transportrichtung. In anderen Worten bläst die Düseneinrichtung Luft in die Folienschläuche ein, um diese im Betrieb mit Luft zu füllen, wodurch die beiden Folienbahnen im Betrieb in dem Bereichen zwischen den erzeugten Schweißnähten voneinander beabstandet werden. Dazu kann beispielsweise die Düseneinrichtung eine Mehrzahl von Düsen aufweisen, die entlang der Längsrichtung angeordnet, so dass jeweils eine Düse in der Transportrichtung korrespondierend, insbesondere fluchtend, mit jeweils einer äußeren Aussparung der Schweißrolleneinrichtung angeordnet ist. Dadurch ist jede Düse auch fluchtend mit jeweils einem Folienschlauch angeordnet, so dass jede Düse Luft in den entsprechenden Folienschlauch einbläst.

In einer weiteren Ausgestaltung der vorliegenden Erfindung kann vorgesehen sein, dass die Düseneinrichtung eine Mehrzahl von Düsen aufweist, wobei die Düsen in der Längsrichtung derart angeordnet sind, dass jeweils eine Düse in der Transportrichtung korrespondierend, insbesondere fluchtend, mit jeweils einer äußeren Aussparung der Schweißrolleneinrichtung angeordnet ist, insbesondere wobei sich jede Düse im Betrieb zumindest teilweise in die entsprechende Aussparung hinein oder durch die entsprechende Aussparung hindurch erstreckt.

In anderen Worten sind die Düsen somit entlang der Längsrichtung derart angeordnet bzw. verteilt, dass jeweils eine Düse in der Transportrichtung fluchtend mit jeweils einer äußeren Aussparung der Schweißrolleneinrichtung angeordnet ist. In anderen Worten bläst jede Düse Luft in Richtung der entsprechend fluchtenden Aussparung. Dadurch ist jede Düse auch fluchtend mit jeweils einem entsprechenden Folienschlauch angeordnet, der in den Aussparungen erzeugt wird, so dass jede Düse Luft in den entsprechenden Folienschlauch einbläst.

In einer weiteren Ausgestaltung der vorliegenden Erfindung kann vorgesehen sein, dass die zweite Folienzuführeinrichtung ein zweites Luftpolsterfolienerzeugungssystem aufweist, wobei der Schritts des Erzeugens des Weiteren aufweist, dass die zweite Folie als Luftpolsterfolie aus zwei aufeinanderliegenden Folienbahnen im Durchlaufbetrieb mittels einer Schweißrolleneinrichtung des zweiten Luftpolsterfolienerzeugungssystem erzeugt wird.

Dadurch sind beide Folien, aus denen die Umverpackung erzeugt wird, als Luftpolsterfolie ausgebildet. Auf diese Weise wird erreicht, dass das Packgut auf allen Seiten gepolstert ist, da die Umverpackung nur aus Luftpolsterfolien gebildet wird, welche das Packgut komplett umschließen.

In einer weiteren Ausgestaltung der vorliegenden Erfindung kann vorgesehen sein, dass die Folienbahnen jedes Luftpolsterfolienerzeugungssystems mittels zweier Folienbahnzuführungen des entsprechenden Luftpolsterfolienerzeugungssystems der Schweißrolleneinrichtung des entsprechenden Luftpolsterfolienerzeugungssystems zugeführt werden.

Die Folienbahnen zu Führungen können beispielsweise als Rollen ausgebildet sein auf denen die Folienbahnen aufgewickelt sind. Zum zuführen werden die Folienbahnen von den entsprechenden Rollen abgewickelt.

In einer weiteren Ausgestaltung der vorliegenden Erfindung kann vorgesehen sein, dass die Folienbahnen jedes Luftpolsterfolienerzeugungssystems jeweils in einer Transportrichtung bewegt werden, wobei in dem Schritt des Erzeugens die aufeinanderliegenden Folienbahnen mittels der entsprechenden Schweißrolleneinrichtung des jeweiligen Luftpolsterfolienerzeugungssystems miteinander verschweißt werden, so dass in der Transportrichtung verlaufende Luftschläuche erzeugt werden, die die Luftpolsterfolie ausbilden.

Die Transportrichtung der Folienbahnen entspricht der Bewegungsrichtung der Folienbahnen. Die Transportrichtung der Folienbahnen entspricht damit auch der Bewegungsrichtung der Luftpolsterfolie. Die Schweißrolleneinrichtung erzeugt Luftschläuche die parallel zueinander angeordnet sind und in der Transportrichtung verlaufen. Im Bereich der Quertrennschweißvorrichtung und der Längstrennschweißeinrichtungen entspricht die Transportrichtung der Förderrichtung der Folienverpackungsmaschine. Folglich verlaufen die erzeugten Luftschläuche während des Quertrennschweißens und des Längstrennschweißens in der Förderrichtung. Die Luftschläuche erstrecken sich somit bezüglich der Förderrichtung des Packguts in einer Längsrichtung.

In einer weiteren Ausgestaltung der vorliegenden Erfindung kann vorgesehen sein, dass in dem Schritt des Quertrennschweißens durch das Verschweißen der Folien quer zu der Förderrichtung mittels der Quertrennschweißvorrichtung die Luftschläuche der jeweiligen Luftpolsterfolie in der Transportrichtung verschlossen werden.

Da sich die Luftschläuche, wie zuvor beschrieben, in der Transportrichtung und somit auch zumindest in dem Bereich der Quertrennschweißvorrichtung und der Längstrennschweißvorrichtungen in der Förderrichtung erstrecken bzw. verlaufen, werden die Luftschläuche durch die Quertrennschweißvorrichtung, die die Folien quer zu der Förderrichtung miteinander verschweißt, durch dieses verschweißen ebenfalls verschlossen. Auf diese Weise werden für die entsprechenden um Verpackungen des Packguts verschlossene Luftschläuche aus jeder Luftpolsterfolie gebildet, die sich in der Förderrichtung von am ersten Ende zu einem zweiten Ende der Umverpackung, insbesondere von einem ersten zu einem zweiten Längsende der Umverpackung, erstrecken.

In einer weiteren Ausgestaltung der vorliegenden Erfindung kann vorgesehen sein, dass die erste Folie eine obere Folie ist und die zweite Folie eine untere Folie ist.

In einer Betriebsposition der Folienverpackungsmaschine ist die Förderrichtung in einer horizontalen Ebene im Raum angeordnet. Eine vertikale Richtung ist senkrecht zu der horizontalen Richtung angeordnet. Die Raumorientierungen "oben" und "unten" sind bzgl. der vertikalen Richtung in Hinblick auf die horizontale Ebene zu verstehen. Vorzugsweise ist zumindest die obere Folie als Luftpolsterfolie ausgebildet, wobei dementsprechend die erste Folienzuführeinrichtung ein Luftpolsterfolienerzeugungssystem aufweist. Insbesondere sind sowohl die obere als auch die untere Folie als Luftpolsterfolie ausgebildet, wobei jede Folienzuführeinrichtung jeweils ein Luftpolsterfolienerzeugungssystem aufweist.

In einer weiteren Ausgestaltung der vorliegenden Erfindung kann vorgesehen sein, dass ein radialer Abstand zwischen der Innenwelle und der Außenwelle in dem Bereich der äußeren Stege kleiner ist als in dem Bereich der äußeren Aussparungen.

Dadurch wird erreicht, dass der Wärmetransfer zwischen der Innenwelle und der Außenwelle in einem Bereich der äußeren Stege größer ist als in einem Bereich der äußeren Aussparungen. In anderen Worten, sind das Außenprofil der Innenwelle und das Innenprofil der Außenwelle derart ausgebildet, um den bestimmten radialen Abstand zu erzeugen.

In einer weiteren Ausgestaltung der vorliegenden Erfindung kann vorgesehen sein, dass die Innenwelle eine Mehrzahl von inneren Stegen aufweist, die sich bezüglich der Längsachse in der radialen Richtung in Richtung der Außenwelle hin erstrecken, wobei die inneren Stege in der Längsrichtung voneinander beabstandet sind, und wobei die inneren Stege in der Längsrichtung derart angeordnet sind, dass jeweils ein innerer Steg korrespondierend, insbesondere radial fluchtend, zu jeweils einem äußeren Steg angeordnet ist.

Auf diese Weise wird ein einfacher Wärmetransfer von den inneren Stegen auf die äußeren Stege ermöglicht.

In einer weiteren Ausgestaltung der vorliegenden Erfindung kann vorgesehen sein, dass die Innenwelle zwischen jeweils zwei benachbarten, inneren Stegen jeweils eine innere Aussparung aufweist, wobei ein radialer Abstand der inneren Stege zu der Außenwelle kleiner ist als ein radialer Abstand der inneren Aussparungen, insbesondere eines Bodens der inneren Aussparungen, zu der Außenwelle.

Auf diese Weise ist die Innenwelle derart ausgestaltet, dass auch der radiale Abstand zwischen der Innenwelle und der Außenwelle in dem Bereich der äußeren Stege kleiner ist als in dem Bereich der äußeren Aussparungen, so dass der Wärmetransfer zwischen der Innenwelle und der Außenwelle in einem Bereich der äußeren Stege größer ist als in einem Bereich der äußeren Aussparungen.

In einer weiteren Ausgestaltung der vorliegenden Erfindung kann vorgesehen sein, dass der radialer Abstand der inneren Stege zu der Außenwelle kleiner ist als 0,5 µm, wobei der radiale Abstand vorzugsweise 0,05 µm bis 0,5 µm, insbesondere 0,1 µm beträgt.

Auf diese Weise wird ein Abstand zwischen den inneren Stegen und der Außenwelle erreicht, der einen hohen Wärmetransfer ermöglicht.

In einer weiteren Ausgestaltung der vorliegenden Erfindung kann vorgesehen sein, dass der radialer Abstand der inneren Aussparungen, insbesondere eines Bodens der inneren Aussparungen, zu der Außenwelle größer ist als 0,5 mm, vorzugsweise 0,5 mm bis 1 cm, insbesondere 3 mm.

Auf diese Weise wird ein Abstand zwischen den inneren Aussparungen, insbesondere einem Boden der inneren Aussparungen, und der Außenwelle erreicht, der nur einen minimalen, vernachlässigbaren Wärmetransfer zulässt.

In einer weiteren Ausgestaltung der vorliegenden Erfindung kann vorgesehen sein, dass sich jeder äußere Steg nach radial außen hin verjüngt.

Da die Folienbahnen nur durch einen Wärmeübertrag am radial äußeren Ende jedes äußeren Stegs verschweißt werden, ist dementsprechend auch die Temperatur am radial äußeren Ende jedes äußeren Stegs ausschlaggebend dafür, wie hoch dieser Wärmeübertrag zum Verschweißen ist. Weisen die äußeren Stege eine gleichbleibende Dicke auf, so sinkt die Temperatur beim Heizen von dem radial inneren Ende zu dem radial äußeren Ende der Stege ab. Durch die Verjüngung der Stege nach radial außen hin wird erreicht, dass die Temperatur der Stege von dem radial inneren Ende hin zu dem radial äußeren Ende der Stege nicht bzw. weniger stark absinkt. Dadurch wird ein effizienterer Wärmetransfer erreicht. Des Weiteren wird durch diese Ausbildung der äußeren Stege die Stabilität der äußeren Stege erhöht.

In einer weiteren Ausgestaltung der vorliegenden Erfindung kann vorgesehen sein, dass jeder äußere Steg einen ersten Bereich mit einer ersten Erstreckung in der Längsrichtung und einen zweiten Bereich mit einer zweiten Erstreckung in der Längsrichtung aufweist, wobei der zweite Bereich radial weiter außen von dem ersten Bereich angeordnet ist, und wobei die zweite Erstreckung kleiner ist als die erste Erstreckung.

In anderen Worten verjüngen sich die äußeren Stege in dieser Ausgestaltung nach radial außen hin, wodurch, wie zuvor beschrieben, ein effizienterer Wärmetransfer erreicht wird.

In einer weiteren Ausgestaltung der vorliegenden Erfindung kann vorgesehen sein, dass die äußeren Stege in der Längsrichtung aufeinanderfolgend mit demselben Versatz angeordnet sind, wobei ein Versatz benachbarter Stege 0,1 cm bis 3 cm, insbesondere 0,8 cm, beträgt.

Durch einen gleichbleibenden Versatz der Stege wird ein gleichbleibender Abstand zwischen benachbarten Schweißnähten der Luftpolsterfolie erreicht. Auf diese Weise ist die Luftpolsterfolie möglichst gleichförmig ausgestaltet, so dass auch die Polsterung über die gesamte Fläche der Luftpolsterfolie im Wesentlichen gleich ist.

In einer weiteren Ausgestaltung der vorliegenden Erfindung kann vorgesehen sein, dass die äußeren Stege an einem radial äußeren Ende in der Längsrichtung jeweils eine Erstreckung aufweisen, die 0,5 mm bis 1 cm, insbesondere 3 mm, beträgt.

In anderen Worten ist diese Erstreckung die Dicke der äußeren Stege in der Längsrichtung. Die Dicke der äußeren Stege an dem radial äußersten Ende entspricht wiederum auch der Breite der Kontaktfläche mit der der Schweißrolleneinrichtung zugewandten Folienbahn und damit auch der Breite der zu erzeugenden Schweißnaht.

In einer weiteren Ausgestaltung der vorliegenden Erfindung kann vorgesehen sein, dass die Schweißrolleneinrichtung des Weiteren zwei Lagerungseinrichtungen zum Lagern der Außenwelle auf der Innenwelle, insbesondere wobei die Lagerungseinrichtungen jeweils an einem axialen Ende der Außenwelle angeordnet sind, und wobei sich die Innenwelle in der Längsrichtung mindestens jeweils bis zu dem axialen Ende der Außenwelle hin erstreckt.

Dadurch ist die Außenwelle auf einfache Art und Weise auf der feststehenden Innenwelle in der Drehrichtung drehbar gelagert.

In einer weiteren Ausgestaltung der vorliegenden Erfindung kann vorgesehen sein, dass die Außenwelle zwei äußerste Aussparungen aufweist, die bezüglich der Längsrichtung auf gegenüberliegenden Seiten der äußeren Stege der Außenwelle angeordnet sind, wobei sich die äußersten Aussparungen der Außenwelle in der Längsrichtung von den äußeren Stegen weg erstrecken.

Auf diese Weise wird erreicht, dass der Umfangsbereich der Außenwelle, der sich in der Längsrichtung an die äußersten der äußeren Stege anschließt, von den äußeren Stegen thermisch isoliert ist, sodass in diesem Bereich kein Wärmeübertrag und somit auch kein Verschweißen stattfinden kann.

In einer weiteren Ausgestaltung der vorliegenden Erfindung kann vorgesehen sein, dass die Innenwelle zwei äußerste Aussparungen aufweist, die bezüglich der Längsrichtung auf gegenüberliegenden Seiten der inneren Stege der Innenwelle angeordnet sind, wobei sich die äußersten Aussparungen der Innenwelle in der Längsrichtung von den inneren Stegen weg erstrecken.

Auf diese Weise wird erreicht, dass der Umfangsbereich der Innenwelle, der sich in der Längsrichtung an die äußersten der inneren Stege anschließt, von der Außenwelle weiter beabstandet ist als die inneren Stege, sodass in diesem Bereich kein bzw. nur ein geringer Wärmetransfer auf die Außenwelle stattfinden kann.

In einer weiteren Ausgestaltung der vorliegenden Erfindung kann vorgesehen sein, dass die Düseneinrichtung eine Mehrzahl von Düsen aufweist, wobei die Düsen in der Längsrichtung derart angeordnet sind, dass jeweils eine Düse in der Transportrichtung korrespondierend, insbesondere fluchtend, mit jeweils einer äußeren Aussparung der Schweißrolleneinrichtung angeordnet ist, insbesondere wobei sich jede Düse im Betrieb zumindest teilweise in die entsprechende Aussparung hinein oder durch die entsprechende Aussparung hindurch erstreckt.

In anderen Worten sind die Düsen somit entlang der Längsrichtung derart angeordnet bzw. verteilt, dass jeweils eine Düse in der Transportrichtung fluchtend mit jeweils einer äußeren Aussparung der Schweißrolleneinrichtung angeordnet ist. In anderen Worten bläst jede Düse Luft in Richtung der entsprechend fluchtenden Aussparung. Dadurch ist jede Düse auch fluchtend mit jeweils einem entsprechenden Folienschlauch angeordnet, der in den Aussparungen erzeugt wird, so dass jede Düse Luft in den entsprechenden Folienschlauch einbläst.

In einer weiteren Ausgestaltung der vorliegenden Erfindung kann vorgesehen sein, dass jede Düse senkrecht zu der Transportrichtung ein Querschnittsprofil aufweist, das so ausgebildet ist, dass ein Abstand der Folienbahnen in einem Bereich jeder Düse vergrößert wird.

Die Düsen der Düseneinrichtung sind bezüglich der Transportrichtung stromaufwärts von der Schweißrolleneinrichtung und zwischen den beiden Folienbahnen angeordnet. Dabei ist das Querschnittsprofil der Düsen senkrecht zu der Transportrichtung so ausgebildet, dass es sich zumindest teilweise durch die beiden Ebenen, in der die beiden Folienbahnen verlaufen, hindurch erstreckt. Im Durchlaufbetrieb laufen die Folienbahnen somit über das Querschnittsprofil der Düsen und werden entsprechend dem Querschnittsprofil der Düsen vorgeformt. Insbesondere wird durch das Vorformen mittels des Querschnittsprofil der Düsen erreicht, dass die Folienbahnen in dem Bereich der äußeren Aussparungen weiter voneinander beabstandet sind als in dem Bereich der äußeren Stege.

In einer weiteren Ausgestaltung der vorliegenden Erfindung kann vorgesehen sein, dass das System zwei Schweißrolleneinrichtungen aufweist, wobei die Schweißrolleneinrichtungen auf gegenüberliegenden Seiten der Folienbahnen angeordnet sind, so dass die Folienbahnen zwischen den Schweißrolleneinrichtungen in der Transportrichtung hindurchlaufen, wobei die Längsachsen der beiden Innenwellen der Schweißrolleneinrichtungen parallel zueinander und senkrecht zu der Transportrichtung angeordnet sind, wobei jeweils zwei äußere Stege der Schweißrolleneinrichtungen gegenüberliegend zueinander angeordnet sind, insbesondere so dass sie die Folienbahnen zwischen sich verschweißen.

Durch die Verwendung von zwei Schweißrolleneinrichtungen wird ein gleichmäßiger Wärmeübertrag von beiden Seiten der Folienbahnen ermöglicht. Die Qualität der Schweißnähte wird somit verbessert. Des Weiteren können sich in dieser Ausgestaltung die Folienschläuche der Luftpolsterfolie sowohl in die äußeren Aussparungen der ersten Schweißrolleneinrichtung als auch in die äußeren Aussparungen der zweiten Schweißrolleneinrichtung erstrecken.

In einer weiteren Ausgestaltung der vorliegenden Erfindung kann vorgesehen sein, dass das System des Weiteren eine Bewegungseinrichtung aufweist, die dazu ausgebildet ist, die Schweißrolleneinrichtungen in eine Arbeitsposition zu bewegen, in der ein Abstand zwischen den äußeren Stegen der Schweißrolleneinrichtungen gleich oder kleiner als die Dicke beider Folienbahnen ist.

Auf diese Weise werden die äußeren Stege der Schweißrolleneinrichtungen in der Arbeitsposition so nahe zueinander angeordnet, dass die beiden Folienbahnen in dem Bereich der äußeren Stege miteinander verschweißt werden können. Die Folienbahnen werden zusätzlich in dem Bereich zwischen den äußeren Stegen der Schweißrolleneinrichtungen beim Verschweißen aneinandergedrückt.

In einer weiteren Ausgestaltung der vorliegenden Erfindung kann vorgesehen sein, dass das System des Weiteren eine Vorspanneinrichtung aufweist, die dazu ausgebildet ist, die Schweißrolleneinrichtungen in eine Ruheposition vorzuspannen, in der ein Abstand zwischen den Schweißrolleneinrichtungen größer ist als eine Dicke beider Folienbahnen.

Auf diese Weise werden die äußeren Stege der Schweißrolleneinrichtungen in der Ruheposition so weit voneinander beabstandet, dass die beiden Folienbahnen in dem Bereich der äußeren Stege nicht miteinander verschweißt werden können. In anderen Worten sind in der Ruheposition die Schweißrolleneinrichtungen von den beiden Folienbahnen soweit beabstandet, dass kein Wärmetransfer zwischen den Schweißrolleneinrichtungen und den Folienbahnen stattfinden kann. Die Ruheposition wird beispielsweise bei einem Stillstand des Systems vor oder nach dem Verschweißen, insbesondere im Fall eines Stromausfalls, eingenommen.

In einer weiteren Ausgestaltung der vorliegenden Erfindung kann vorgesehen sein, dass die Bewegungseinrichtung und die Vorspanneinrichtung mittels eines pneumatischen Zylinders ausgebildet sind.

Ein pneumatischer Zylinder weist im Allgemeinen einen Arbeitszylinder mit zwei Luftkammern und einen Kolben auf. Der Kolben ist mittels pneumatischer Ansteuerung einer der Luftkammern zwischen einer Arbeitsposition und einer Ruheposition versetzbar. Der pneumatische Zylinder kann somit sowohl als Bewegungseinrichtung als auch als Vorspanneinrichtung eingesetzt werden.

In einer weiteren Ausgestaltung der vorliegenden Erfindung kann vorgesehen sein, dass das System des Weiteren eine Trägerstruktur zum Tragen der Schweißrolleneinrichtungen aufweist, insbesondere wobei die Bewegungseinrichtung und/oder die Vorspanneinrichtung an der die Trägerstruktur angeordnet sind.

Die Trägerstruktur kann beispielsweise eine feststehende Rahmenstruktur sein, an der die verschiedenen Komponenten des Systems angebracht sind.

In einer weiteren Ausgestaltung der vorliegenden Erfindung kann vorgesehen sein, dass das System des Weiteren ein Gegenelement aufweist, wobei die Folienbahnen zwischen der Schweißrolleneinrichtung und dem Gegenelement in der Transportrichtung hindurchlaufen, wobei die Schweißrolleneinrichtung und das Gegenelement derart angeordnet sind, dass die Folienbahnen zwischen dem Gegenelement und der Schweißrolleneinrichtung aneinander gedrückt werden, insbesondere wobei im Betrieb ein Abstand zwischen der Schweißrolleneinrichtung und dem Gegenelement in einem Bereich jedes äußeren Stegs gleich oder kleiner der Summe aus der Dicke beider Folienbahnen ist, insbesondere so dass die Folienbahnen zwischen den äußeren Stegen der Schweißrolleneinrichtung und dem Gegenelement verschweißt werden.

In dieser alternativen Ausgestaltung ist nur eine Schweißrolleneinrichtung zum Erzeugen der Luftpolsterfolie vorgesehen. Das Gegenelement ist dazu vorgesehen eine Gegenanlagefläche für die Schweißrolleneinrichtung auszubilden die der Schweißrolleneinrichtungen gegenüberliegt. Dadurch wird erreicht, dass die Folienbahnen in dem Bereich zwischen den äußeren Stegen der Schweißrolleneinrichtung und der Gegenanlagefläche des Gegenelements beim Verschweißen aneinandergedrückt werden.

In einer weiteren Ausgestaltung der vorliegenden Erfindung kann vorgesehen sein, dass das System des Weiteren eine Querschweißeinrichtung aufweist, die in der Transportrichtung stromabwärts von der Schweißrolleneinrichtung angeordnet ist, und wobei die Querschweißeinrichtung dazu ausgebildet ist, die Folienbahnen quer zur Transportrichtung zu verschweißen.

In anderen Worten ist die Querschweißeinrichtung dazu vorgesehen, Schweißnähte quer zu der Transportrichtung zu erzeugen, um die Folienschläuche der Luftpolsterfolie in der Transportrichtung zu verschließen.

In einer weiteren Ausgestaltung der vorliegenden Erfindung kann vorgesehen sein, dass das Verfahren des Weiteren den Schritt aufweist:
- Bewegen der Schweißrolleneinrichtungen mittels einer Bewegungseinrichtung in eine Arbeitsposition, in der ein Abstand zwischen den äußeren Stegen der Schweißrolleneinrichtungen gleich oder kleiner als die Gesamtdicke beider Folienbahnen ist.

Auf diese Weise werden die äußeren Stege der Schweißrolleneinrichtungen in der Arbeitsposition so nahe zueinander angeordnet, dass die beiden Folienbahnen in dem Bereich der äußeren Stege miteinander verschweißt werden können. Die Folienbahnen werden zusätzlich in dem Bereich zwischen den äußeren Stegen der Schweißrolleneinrichtungen beim Verschweißen aneinandergedrückt.

In einer weiteren Ausgestaltung der vorliegenden Erfindung kann vorgesehen sein, dass das Verfahren des Weiteren den Schritt aufweist:
- Vorspannen der Schweißrolleneinrichtungen mittels einer Vorspanneinrichtung in eine Ruheposition, in der ein Abstand zwischen den Schweißrolleneinrichtungen größer ist als eine Gesamtdicke beider Folienbahnen.

Auf diese Weise werden die äußeren Stege der Schweißrolleneinrichtungen in der Ruheposition so weit voneinander beabstandet, dass die beiden Folienbahnen in dem Bereich der äußeren Stege nicht miteinander verschweißt werden können. In anderen Worten sind in der Ruheposition die Schweißrolleneinrichtungen von den beiden Folienbahnen soweit beabstandet, dass kein Wärmetransfer zwischen den Schweißrolleneinrichtungen und den Folienbahnen stattfinden kann. Die Ruheposition wird beispielsweise bei einem Stillstand des Systems vor oder nach dem Verschweißen, insbesondere im Fall eines Stromausfalls, eingenommen.

In einer weiteren Ausgestaltung der vorliegenden Erfindung kann vorgesehen sein, dass in dem Schritt des Anordnens der Düseneinrichtung die Düsen der Düseneinrichtung derart angeordnet werden, dass sich jede Düse im Betrieb zumindest teilweise in die entsprechenden gegenüberliegenden äußeren Aussparungen hinein oder durch diese hindurch erstreckt.

In anderen Worten sind die Düsen somit entlang der Längsrichtung derart angeordnet bzw. verteilt, dass jeweils eine Düse in der Transportrichtung fluchtend mit jeweils einem Paar von äußeren Aussparungen der Schweißrolleneinrichtungen angeordnet ist. In anderen Worten kann dann jede Düse Luft in Richtung der entsprechenden Aussparungen blasen. Dadurch ist jede Düse auch fluchtend mit jeweils einem entsprechenden Folienschlauch angeordnet, der in den Aussparungen erzeugt wird, so dass jede Düse Luft in den entsprechenden Folienschlauch einblasen kann.

In einer weiteren Ausgestaltung der vorliegenden Erfindung kann vorgesehen sein, dass jede Düse senkrecht zu der Transportrichtung ein Querschnittsprofil aufweist, wobei das Verfahren des Weiteren den Schritt aufweist:
- Vergrößern eines Abstands der Folienbahnen in einem Bereich jeder Düse durch Führen der Folienbahnen über das Querschnittsprofil der jeweiligen Düse.

Die Düsen der Düseneinrichtung sind bezüglich der Transportrichtung stromaufwärts von der Schweißrolleneinrichtung und zwischen den beiden Folienbahnen angeordnet. Dabei ist das Querschnittsprofil der Düsen senkrecht zu der Transportrichtung so ausgebildet, dass es sich zumindest teilweise durch die beiden Ebenen, in der die beiden Folienbahnen verlaufen, hindurch erstreckt. Im Durchlaufbetrieb laufen die Folienbahnen somit über das Querschnittsprofil der Düsen und werden entsprechend dem Querschnittsprofil der Düsen vorgeformt. Insbesondere wird durch das Vorformen mittels des Querschnittsprofil der Düsen erreicht, dass die Folienbahnen in dem Bereich der äußeren Aussparungen weiter voneinander beabstandet sind als in dem Bereich der äußeren Stege.

In einer weiteren Ausgestaltung der vorliegenden Erfindung kann vorgesehen sein, dass das Verfahren des Weiteren den Schritt aufweist:
- Querverschweißen der Folienbahnen mittels einer Querschweißeinrichtung quer zu der Transportrichtung, um die Folienschläuche zu verschließen.

In anderen Worten ist die Querschweißeinrichtung dazu vorgesehen, Schweißnähte quer zu der Transportrichtung zu erzeugen, um die Folienschläuche der Luftpolsterfolie in der Transportrichtung zu verschließen.

Es versteht sich, dass die voranstehend genannten und die nachstehenden noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Ausführungsformen der Erfindung sind in der Zeichnung dargestellt und werden in der nachfolgenden Beschreibung näher erläutert. Es zeigen:
Fig.1 eine Längsschnittansicht einer Ausführungsform einer Schweißrolleneinrichtung bezüglich einer Längsachse der Schweißrolleneinrichtung;
Fig. 2 eine schematische Ansicht einer ersten Ausführungsform eines Systems zum Erzeugen einer Luftpolsterfolie;
Fig. 3 eine schematische Ansicht einer zweiten Ausführungsform eines Systems zum Erzeugen einer Luftpolsterfolie;
Fig. 4 eine Längsschnittansicht des Systems aus Fig. 2 senkrecht zu der Kontaktfläche zwischen den Schweißrolleneinrichtungen;
Fig. 5 eine Längsschnittansicht des Systems aus Fig. 3 senkrecht zu der Kontaktfläche zwischen der Schweißrolleneinrichtung und dem Gegenelement;
Fig. 6 eine schematische Ansicht einer Ausführungsform eines Verfahrens zum Erzeugen einer Luftpolsterfolie;
Fig. 7 eine isometrische Ansicht einer dritten Ausführungsform eines Systems zum Erzeugen einer Luftpolsterfolie;
Fig. 8 eine Seitenansicht des Systems aus Fig. 7 im Schnitt entlang der Linie A-A;
Fig. 9 eine Längsschnittansicht des Systems aus den Fig. 7 und 8 entlang der Linie B-B;
Fig. 10 eine schematische Ansicht einer ersten Ausführungsform einer Folienverpackungsmaschine,
Fig. 11 eine schematische Ansicht einer zweiten Ausführungsform einer Folienverpackungsmaschine,
Fig. 12 Eine Seitenansicht eines Ausschnitts der Folienverpackungsmaschinen aus Fig. 10 und 11; und
Fig. 13 eine schematische Ansicht einer Ausführungsform eines Verfahrens zum Verpacken eines Packguts.

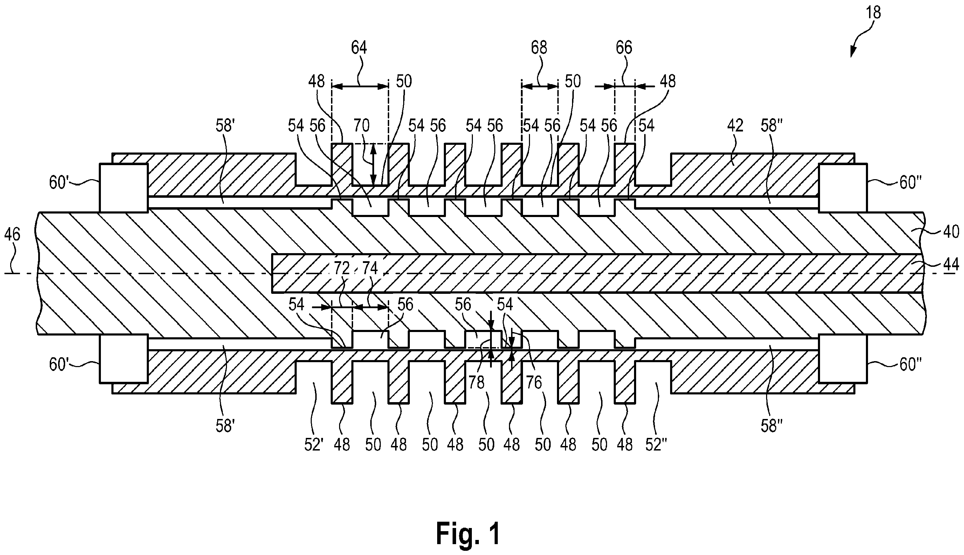

Fig. 1 zeigt eine Ausführungsform einer Schweißrolleneinrichtung 18 zum erzeugen einer Luftpolsterfolie aus zwei aufeinanderliegenden Folienbahnen im Durchlaufbetrieb. Die Schweißrolleneinrichtung weist eine feststehende Innenwelle 40, eine um die Innenwelle 40 angeordnete Außenwelle 42 und eine Heizeinrichtung 44 auf. Die Außenwelle 42 und die Innenwelle 40 weisen eine gemeinsame Längsachse 46 auf. Die Längsachse 46 erstreckt sich in einer Längsrichtung. Die Außenwelle 42 ist um die Längsachse 46 in einer Drehrichtung drehbar gelagert.

Die Heizeinrichtung 44 ist dazu eingerichtet, die Innenwelle 40 zum beheizen. Dazu ist die Heizeinrichtung 44 in der Innenwelle 40 angeordnet. Die Heizeinrichtung 44 kann beispielsweise eine Heizpatrone sein, wobei ist die Innenwelle 40 hohl ausgebildet und die Heizpatrone in die Innenwelle 40 eingeschoben ist.

Die Außenwelle 42 weist eine Mehrzahl von äußeren Stegen 48 auf. Die äußeren Stege 42 erstrecken sich bezüglich der Längsachse 46 in einer radialen Richtung nach außen hin. Die äußeren Stege 42 weisen an einem radial äußeren Ende in der Längsrichtung jeweils eine Erstreckung bzw. Dicke 66 auf, die 0,5 mm bis 1 cm, insbesondere 3 mm, beträgt. Die äußeren Stege 42 sind in der Längsrichtung voneinander beabstandet. Die Außenwelle 42 weißt zwischen jeweils zwei benachbarten, äußeren Stegen 48 jeweils eine äußere Aussparung 50 auf. Die äußeren Aussparungen 50 weisen an einem radial äußeren Ende in der Längsrichtung jeweils eine Erstreckung bzw. Dicke 68 auf, die 0,5 mm bis 2,7 cm, insbesondere 5 mm, beträgt.

Die äußeren Aussparungen 50 weisen in der radialen Richtung eine Erstreckung bzw. Tiefe 70 auf. Die Tiefe 70 entspricht einem Abstand zwischen einem Boden einer Aussparung 50 und dem radial äußeren Ende eines benachbarten äußeren Steaks 48. In anderen Worten entspricht die Tiefe 70 auch einer Erstreckung bzw. Länge der äußeren Stege 48 in der radialen Richtung.

Vorzugsweise sind die äußeren Stege 42 in der Längsrichtung aufeinanderfolgend mit demselben Versatz 64 angeordnet. Der Versatz 64 benachbarter Stege beträgt 0,1 Zentimeters bis 3 cm, insbesondere 0,8 cm. Der Versatz 64 entspricht dabei der Summe aus der Dicke 66 eines äußeren Stegs 48 und der Dicke 68 einer äußeren Aussparung 50.

Die Innenwelle 40 weist eine Mehrzahl von inneren Stegen 54 auf. Die inneren Stege 54 erstrecken sich bezüglich der Längsachse 46 in der radialen Richtung in Richtung der Außenwelle 42 hin. Die inneren Stege 54 sind in der Längsrichtung voneinander beabstandet. Die inneren Stege 54 weisen an einem radial äußeren Ende in der Längsrichtung jeweils eine Erstreckung bzw. Dicke 72 auf, die 0,5 mm bis 1 cm, insbesondere 3 mm, beträgt. Die Innenwelle 40 weist zwischen jeweils zwei benachbarten, inneren Stegen 54 jeweils eine innere Aussparung 56 auf. Die inneren Aussparungen 56 weisen an einem radial äußeren Ende in der Längsrichtung jeweils eine Erstreckung bzw. Dicke 74 auf, die 0,5 mm bis 2,7 cm, insbesondere 5 mm, beträgt.

Ein radialer Abstand 76 der inneren Stege 54 zu der Außenwelle 42 ist kleiner als ein radialer Abstand 78 von dem Boden der inneren Aussparungen 56 zu der Außenwelle 42. Der radialer Abstand 76 der inneren Stege 54 zu der Außenwelle ist kleiner als 0,5 µm. Vorzugsweise beträgt der radiale Abstand 76 0,05 µm bis 0,5 µm, insbesondere 0,1 µm. Der radiale Abstand 78 der inneren Aussparungen 56 zu der Außenwelle ist größer als 0,5 mm. Vorzugsweise beträgt der radialer Abstand 78 0,5 mm bis 1 cm, insbesondere 3 mm.

Die inneren Stege 54 sind in der Längsrichtung derart angeordnet, dass die inneren Stege 54 korrespondierend, insbesondere radial fluchtend, zu den äußeren Stegen 48 angeordnet sind.

Somit ist ein radialer Abstand zwischen der Innenwelle 40 und der Außenwelle 42 in dem Bereich der äußeren Stege 48 kleiner als in dem Bereich der äußeren Aussparungen 50. Dadurch ist die Innenwelle 40 derart ausgebildet, dass ein Wärmetransfer zwischen der Innenwelle 40 und der Außenwelle 42 in einem Bereich der äußeren Stege 48 größer ist als in einem Bereich der äußeren Aussparungen 50.

Die Außenwelle 42 weist des Weiteren zwei äußerste Aussparungen 52', 52" auf. Die äußersten Aussparungen 52', 52" sind bezüglich der Längsrichtung auf gegenüberliegenden Seiten der äußeren Stege 48 der Außenwelle 42 angeordnet. Die äußersten Aussparungen 52', 52" der Außenwelle 42 erstrecken sich in der Längsrichtung weg von den äußeren Stegen 48.

Die Innenwelle 40 weist des Weiteren zwei äußerste Aussparungen 58', 58" auf. Die äußersten Aussparungen 58', 58" sind bezüglich der Längsrichtung auf gegenüberliegenden Seiten der inneren Stege 54 der Außenwelle 40 angeordnet. Die äußersten Aussparungen 58', 58" der Innenwelle 40 erstrecken sich in der Längsrichtung weg von den inneren Stegen 54.

Die Schweißrolleneinrichtung 18 weist des Weiteren zwei Lagereinrichtungen 60', 60" auf. Die Lagereinrichtungen 60', 60" sind zum Lagern der Außenwelle 42 auf der Innenwelle 40 eingerichtet. Die Lagereinrichtungen 60', 60" sind jeweils an einem axialen Ende der Außenwelle 42 angeordnet. Die Innenwelle 40 erstreckt sich in der Längsrichtung mindestens jeweils bis zu dem axialen Ende der Außenwelle 42 hin.

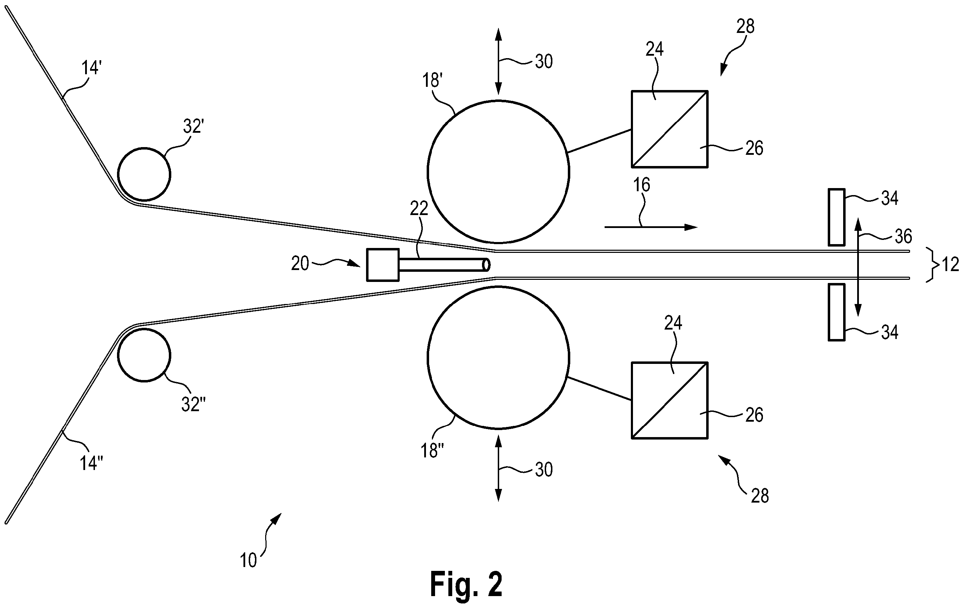

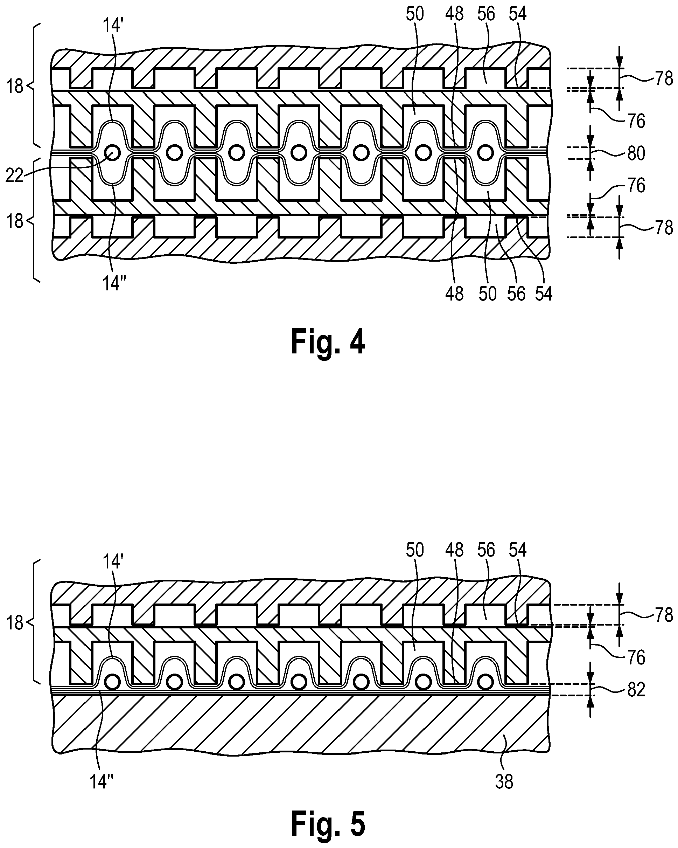

Die Figuren 2 und 4 zeigen eine erste Ausführungsform eines Systems 10 zum Erzeugen einer Luftpolsterfolie12 aus zwei aufeinanderliegenden Folienbahnen 14', 14" im Durchlaufbetrieb, in dem die beiden Folienbahnen 14', 14" in einer Transportrichtung 16 bewegt werden. Das System 10 weist zwei Schweißrolleneinrichtungen 18', 18" und eine Düseneinrichtung 20 auf. Jede der Schweißrolleneinrichtungen 18', 18" ist entsprechend der Schweißrolleneinrichtung 18 aus Fig. 1 ausgebildet.

Die Schweißrolleneinrichtungen 18', 18" sind auf gegenüberliegenden Seiten der Folienbahnen 14', 14" angeordnet, sodass die Folienbahnen 14', 14" zwischen den Schweißrolleneinrichtungen 18', 18" in der Transportrichtung 16 hindurchlaufen. Die Längsachsen der beiden Innenwellen der Schweißrolleneinrichtungen 18', 18" sind senkrecht zu der Transportrichtung 16 und parallel zueinander angeordnet.

Die äußeren Stege 48 der Schweißrolleneinrichtungen 18', 18" sind in der Längsrichtung korrespondierend zueinander angeordnet. In anderen Worten sind jeweils zwei äußere Stege 48 der Schweißrolleneinrichtungen 18', 18" bezüglich der Folienbahnen 14', 14" gegenüberliegend zueinander, sprich auf gegenüberliegenden Seiten der Folienbahnen 14', 14" und zueinander gerichtet, angeordnet. Dies ist insbesondere in Fig. 4 dargestellt. Die äußeren Stege 48 und die äußeren Aussparungen 50 der beiden Schweißrolleneinrichtungen 18', 18" sind somit paarweise angeordnet, wobei jedes Paar bezüglich der Folienbahnen 14', 14" gegenüberliegend zueinander angeordnet ist.

Die korrespondierenden, äußeren Stege 48 der beiden Schweißrolleneinrichtungen 18', 18" weisen einen Abstand 80 auf. In eine Arbeitsposition des Systems 10, in dem verschweißt wird, ist der Abstand 80 gleich oder kleiner als die Gesamtdicke der beiden Folienbahnen 14', 14". Die Gesamtdicke entspricht der Summe der beiden Dicken der beiden Folienbahnen 14', 14". In einer Ruheposition, in der nicht verschweißt wird, ist der Abstand 80 größer als die Gesamtdicke der beiden Folienbahnen 14', 14".

Die Düseneinrichtung 20 ist dazu ausgebildet einem Luftstrom zwischen den Folienbahnen 14', 14" in der Transportrichtung 16 zu erzeugen. Die Düseneinrichtung 20 ist hierzu zwischen den beiden Folienbahnen 14', 14" angeordnet. Die Düseneinrichtung 20 weist eine Mehrzahl von Düsen 22 auf. Bezüglich der Transportrichtung 16 sind die Düsen 22 der Düseneinrichtung 20 stromaufwärts von den Schweißrolleneinrichtungen 18', 18" angeordnet. Die Düsen 22 sind in der Längsrichtung derart angeordnet, dass jeweils eine Düse 22 in der Transportrichtung 16 korrespondierend, insbesondere fluchtend, mit jeweils zwei korrespondierenden, äußeren Aussparungen 50 der Schweißrolleneinrichtungen 18', 18" angeordnet ist. Jede Düse 22 erstreckt sich im Betrieb zumindest teilweise in die entsprechenden Aussparungen 50 hinein oder durch die entsprechenden Aussparungen hindurch erstreckt.

Jede Düse 22 der Düseneinrichtung 20 weiß senkrecht zu der Transportrichtung 16 ein Querschnittsprofil auf. Das Querschnittsprofil ist derart ausgebildet, dass ein Abstand der Folienbahnen in einem Bereich jeder Düse 22 vergrößert wird. Dabei ist das Querschnittsprofil der Düsen 22 senkrecht zu der Transportrichtung 16 so ausgebildet, dass es sich zumindest teilweise durch die beiden Ebenen, in der die beiden Folienbahnen 14', 14" verlaufen, hindurch erstreckt. Im Durchlaufbetrieb laufen die Folienbahnen 14', 14" somit über das Querschnittsprofil der Düsen 22 und werden entsprechend dem Querschnittsprofil der Düsen geführt bzw. vorgeformt. Insbesondere wird durch das Vorformen mittels des Querschnittsprofil der Düsen 22 erreicht, dass die Folienbahnen 14', 14" in dem Bereich der äußeren Aussparungen 50 weiter voneinander beabstandet sind als in dem Bereich der äußeren Stege 48.

Das System 10 weist des Weiteren eine Bewegungseinrichtung 24 auf. Die Bewegungseinrichtung 24 ist dazu ausgebildet, die Schweißrolleneinrichtungen 18', 18" relativ zueinander in einer Bewegungsrichtung 30 aus der Ruheposition in die Arbeitsposition zu bewegen. Die Bewegungsrichtung 30 ist senkrecht zu der Transportrichtung 16 und der Längsrichtung der Längsachsen der beiden Innenwellen der Schweißrolleneinrichtungen 18', 18" angeordnet.

Das System 10 weist des Weiteren eine Vorspanneinrichtung 26 auf. Die Vorspanneinrichtung 26 ist dazu ausgebildet, die Schweißrolleneinrichtungen 18', 18" in der Ruheposition vorzuspannen.

Vorzugsweise weist das System 10 einen pneumatischen Zylinders 28 auf, der die Bewegungseinrichtung 24 und die Vorspanneinrichtung 26 ausbildet. Der pneumatische Zylinder 28 kann beispielsweise einen Arbeitszylinder mit zwei Luftkammern und einen Kolben aufweisen. Der Kolben ist mittels pneumatischer Ansteuerung einer der Luftkammern zwischen einer Arbeitsposition und einer Ruheposition versetzbar. In der Ruheposition haben beide Luftkammern Normaldruck, sprich ca. 1 bar. Zum versetzen des Kolbens in die Arbeitsposition wird eine Kammer pneumatisch auf einen höheren Druck, beispielsweise 12 bar angehoben, wodurch sich der Kolben in die Arbeitsposition bewegt.

Alternativ können die Bewegungseinrichtung 24 und die Vorspanneinrichtung 26 auch separat ausgebildet sein. Beispielsweise kann die Vorspanneinrichtung 26 ein Federelement aufweisen, das die Schweißrolleneinrichtungen in eine Ruheposition vorspannt. Die Bewegungseinrichtung 24 kann eine elektrische, magnetische oder pneumatische Antriebseinrichtung aufwiesen, die dazu ausgebildet ist, die Schweißrolleneinrichtungen 18', 18" relativ zueinander in einer Bewegungsrichtung 30 aus der Ruheposition entgegen der Vorspannkraft der Vorspanneinrichtung 24 in die Arbeitsposition zu bewegen. Beispielsweise kann die Bewegungseinrichtung 24 hierzu einen Elektromotor aufweisen.

Des Weiteren kann das System auch eine Trägerstruktur zum Tragen der Schweißrolleneinrichtungen 18', 18", denn Düseneinrichtung 20, der Bewegungseinrichtung 24 und der Vorspanneinrichtung 26 aufweisen.

Des Weiteren kann das System 10 eine Führungseinrichtung für die Folienbahnen 14', 14" aufweisen. Die Führungseinrichtung kann beispielsweise jeweils eine Umlenkrolle 32', 32" für jeweils eine der Folienbahnen 14', 14" aufweisen.

Des Weiteren kann das System 10 eine Querschweißeinrichtung 34 aufweisen. Die Querschweißeinrichtung ist in der Transportrichtung 16 stromabwärts von den Schweißrolleneinrichtungen 18', 18" angeordnet. Die Querschweißeinrichtung 34 ist dazu ausgebildet, die Folienbahnen 14', 14" quer zur Transportrichtung 16 zu verschweißen. Die Querschweißeinrichtung 34 kann zum Verschweißen beispielsweise einen beheizten Oberstempel und einen beheizten Unterstempel aufweisen, die auf gegenüberliegenden Seiten der Folienbahnen 14', 14" angeordnet sind, so dass die Folienbahnen 14', 14" zwischen dem Oberstempel und dem Unterstempel hindurchlaufen. Zum Verschweißen werden der Oberstempel und der Unterstempel mittels einer weiteren Antriebseinheit relativ zueinander in einer Querschweißbewegungsrichtung 36 aufeinander zu bewegt, um in Kontakt mit den Folienbahnen 14', 14" und diese somit quer zu verschweißen. Nach dem Querverschweißen werden die Stempel auseinander bewegt, so dass die Folienbahnen 14', 14" ohne Kontakt mit der Querschweißbewegungsrichtung 36 zwischen den Stempeln hindurchlaufen können.

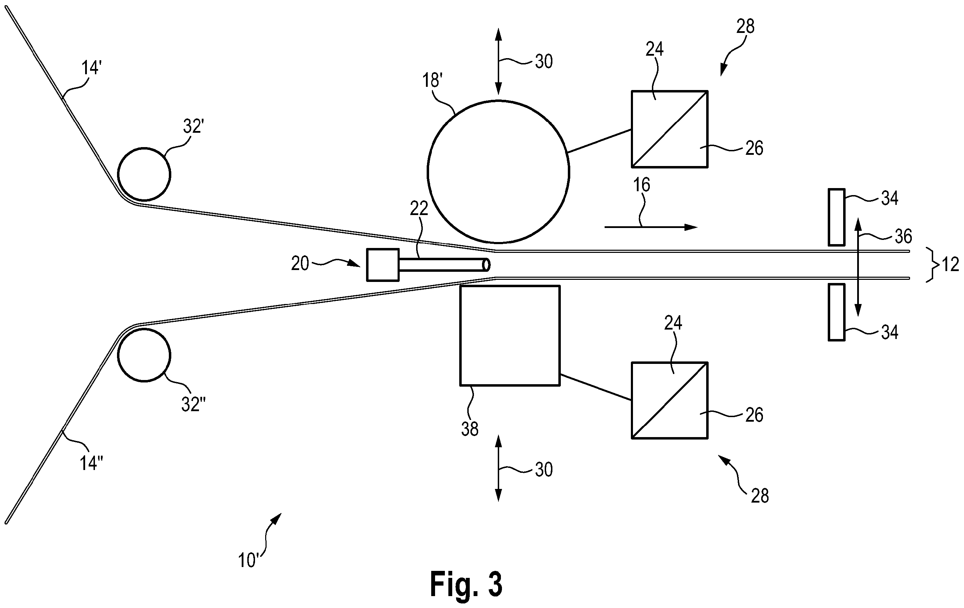

Die Figuren 3 und 5 zeigen eine zweite Ausführungsform eines Systems 10' zum Erzeugen einer Luftpolsterfolie 12 aus zwei aufeinanderliegenden Folienbahnen 14', 14" im Durchlaufbetrieb. Das System 10' entspricht im Wesentlichen dem System 10 aus den Figuren 2 und 4. Gleiche Elemente sind mit gleichen Bezugszeichen versehen und werden nicht näher erläutert.

Der einzige Unterschied des Systems 10' zu dem System 10 aus den Figuren 2 und 4 besteht darin, dass in dem System 10' nur eine Schweißrolleneinrichtung 18 vorgesehen ist. Auf der gegenüberliegenden Seite der Folienbahnen 14', 14" ist statt einer zweiten Schweißrolleneinrichtung ein Gegenelement 38 angeordnet. Die Folienbahnen 14', 14" laufen zwischen der Schweißrolleneinrichtung 18 und dem Gegenelement 38 in der Transportrichtung 16 hindurch.

Die Schweißrolleneinrichtung 18 und das Gegenelement 38 sind derart angeordnet, dass die Folienbahnen zwischen dem Gegenelement 38 und der Schweißrolleneinrichtung 18 aneinandergedrückt werden. Insbesondere kann vorgesehen sein, dass im Betrieb ein Abstand 82 zwischen der Schweißrolleneinrichtung 18 und dem Gegenelement 38 in einem Bereich jedes äußeren Stegs 48 gleich oder kleiner der Gesamtdicke der beiden Folienbahnen 14', 14" ist, sodass die Folienbahnen 14', 14" zwischen den äußeren Stegen 48 der Schweißrolleneinrichtung 18 und dem Gegenelement 38 verschweißt werden.

Vorzugsweise ist in einer Arbeitsposition des Systems 10, in dem verschweißt wird, der Abstand 82 gleich oder kleiner als die Gesamtdicke der beiden Folienbahnen 14', 14". Die Gesamtdicke entspricht der Summe der beiden Dicken der beiden Folienbahnen 14', 14". In einer Ruheposition, in der nicht verschweißt wird, ist der Abstand 82 größer als die Gesamtdicke der beiden Folienbahnen 14', 14".

Die Bewegungseinrichtung 24 und die Vorspanneinrichtung 26 können hierbei wie in ersten Ausführungsform ausgebildet sein, um die Schweißrolleneinrichtung 18 und das Gegenelement 38 relativ zueinander zu bewegen. Die Vorspanneinrichtung 26 ist dazu ausgebildet, die Schweißrolleneinrichtungen 18 und das Gegenelement 38 in der Ruheposition vorzuspannen. Die Bewegungseinrichtung 24 ist dazu ausgebildet, die Schweißrolleneinrichtungen 18 und das Gegenelement 38 relativ zueinander in der Bewegungsrichtung 30 aus der Ruheposition in die Arbeitsposition zu bewegen.

Wie in den Figuren 4 und 5 bezüglich der ersten und der zweiten Ausführungsform der Systeme 10, 10' zum Erzeugen einer Luftpolsterfolie dargestellt, sind die Folienbahnen 14', 14" im Bereich der äußeren Aussparungen 48 voneinander beabstandet und verlaufen um die Düsen 22 der Düseneinrichtung 20 herum. Insbesondere sind die Düsen 22 zwischen den Folienbahnen 14', 14" und zumindest teilweise in den äußeren Aussparungen 48 angeordnet, so dass die Folienbahnen 14', 14" im Bereich der äußeren Aussparungen 48 um ein Querschnittsprofil der Düsen 22 herum geführt werden, um die Folienbahnen 14', 14" im Bereich der äußeren Aussparungen 48 voneinander zu beabstanden.

Die beiden Folienbahnen 14', 14" werden nur in dem Bereich der äußeren Stege 48 und nicht in dem Bereich der äußeren Aussparungen 50 miteinander verscheißt. In anderen Worten werden mittels der äußeren Stege fortlaufende Schweißnähte in der Transportrichtung erzeugt. In dem Bereich der äußeren Aussparungen 48 sind die Folienbahnen 14', 14", wie zuvor beschrieben, voneinander beabstandet. Somit werden durch die äußeren Stege 48 und die äußeren Aussparungen 50 fortlaufende Folienschläuche erzeugt. Die Düsen 22 blasen Luft in Richtung der Transportrichtung 16, um die erzeugten Folienschläuche konstant mit Luft zu füllen und damit die Folienschläuche gleichmäßig zu formen.

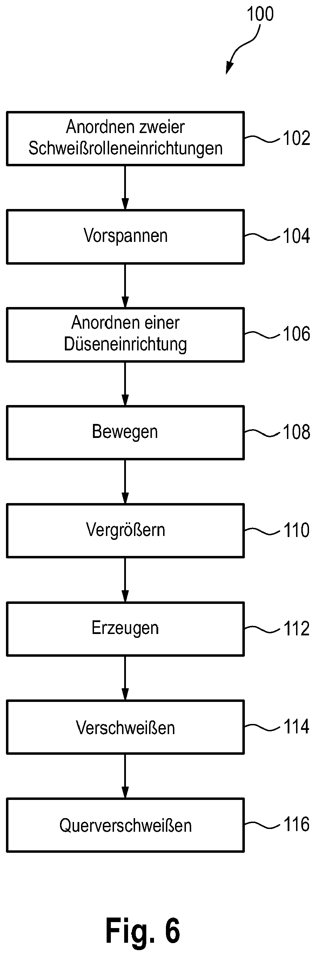

Fig. 6 zeigt eine Ausführungsform eines Verfahrens 100 zum Erzeugen einer Luftpolsterfolie 12 aus zwei aufeinanderliegenden Folienbahnen 14', 14" im Durchlaufbetrieb, in dem die Folienbahnen 14', 14" in einer Transportrichtung 16 bewegt werden. Das Verfahren 100 kann mittels des Systems 10 gemäß der ersten Ausführungsform aus den Figuren 2 und 4 durchgeführt werden.

In einem ersten Schritt 102 des Verfahrens 100 werden zwei Schweißrolleneinrichtungen 18', 18" auf zwei gegenüberliegenden Seiten der Folienbahnen 14', 14" angeordnet, so dass die Folienbahnen 14', 14" zwischen den Schweißrolleneinrichtungen 18', 18" hindurchlaufen. Die Schweißrolleneinrichtungen 18', 18" sind jeweils entsprechend der Schweißrolleneinrichtungen 18 aus Fig. 1 ausgebildet. Die Längsachsen 46 der beiden Innenwellen 40 der Schweißrolleneinrichtungen 18', 18" sind parallel zueinander und senkrecht zu der Transportrichtung 16 angeordnet. Die äußeren Stege 48 der Schweißrolleneinrichtungen 18', 18" sind in der Längsrichtung korrespondierend zueinander angeordnet, so dass je zwei äußeren Stege 18 und je zwei äußere Aussparungen 50 gegenüberliegend zueinander angeordnet sind.

In einem weiteren optionalen Schritt 104 des Verfahrens 100 werden die Schweißrolleneinrichtungen 18', 18" mittels einer Vorspanneinrichtung 24 in eine Ruheposition, in der ein Abstand 80 zwischen den Schweißrolleneinrichtungen 18', 18" größer ist als eine Gesamtdicke beider Folienbahnen 14', 14".

In einem weiteren Schritt 106 des Verfahrens 100 wird eine Düseneinrichtung 20 zwischen den Folienbahnen angeordnet. Die Düseneinrichtung 20 kann vorzugsweise eine Mehrzahl von Düsen 22 aufweisen. Die Düsen 22 werden entlang der Längsrichtung angeordnet, so dass jeweils eine Düse 22 in der Transportrichtung 16 korrespondierend, insbesondere fluchtend, mit je zwei gegenüberliegenden äußeren Aussparungen 48 der Schweißrolleneinrichtung 18', 18" angeordnet ist.

Insbesondere kann in dem Schritt des Anordnens 106 der Düseneinrichtung 20 vorgesehen sein, dass die Düsen 22 der Düseneinrichtung 20 derart angeordnet werden, dass sich jede Düse 22 im Betrieb zumindest teilweise in die entsprechenden gegenüberliegenden äußeren Aussparungen 50 hinein oder durch diese hindurch erstreckt

In einem weiteren optionalen Schritt 108 des Verfahrens 100 werden die Schweißrolleneinrichtungen 18', 18" mittels einer Bewegungseinrichtung 24 in eine Arbeitsposition bewegt, in der ein Abstand 80 zwischen den gegenüberliegenden äußeren Stegen 48 der Schweißrolleneinrichtungen 18', 18" gleich oder kleiner als die Gesamtdicke beider Folienbahnen 14', 14" ist.

In einem weiteren optionalen Schritt 110 des Verfahrens 100 wird ein Abstand der Folienbahnen 14', 14" in einem Bereich jeder Düse 22 durch Führen der Folienbahnen 14', 14" über das Querschnittsprofil der jeweiligen Düse 22 vergrößert.

In einem weiteren Schritt 112 des Verfahrens 100 wird ein Luftstrom mittels der Düseneinrichtung 20 zwischen den Folienbahnen 14', 14" in der Transportrichtung 16 erzeugt. Vorzugsweise bläst dabei jede Düse 22 Luft in Richtung der Transportrichtung 16.

In einem weiteren Schritt 114 des Verfahrens 100 werden die Folienbahnen 14', 14" mittels der Schweißrolleneinrichtungen 18', 18" in der Transportrichtung 16 nur in dem Bereich der äußeren Stege 48 verschweißt, so dass Schweißnähte in der Transportrichtung 16 erzeugt werden und zwischen den Schweißnähten Folienschläuche ausgebildet werden, die sich in der Transportrichtung erstrecken.

In einem weiteren optionalen Schritt 116 des Verfahrens 100 werden die Folienbahnen 14', 14" mittels einer Querschweißeinrichtung 34 quer zu der Transportrichtung 16 verschweißt, um die Folienschläuche zu verschließen. Die Querschweißeinrichtung 34 ist bezüglich der Transportrichtung 16 stromabwärts von den Schweißrolleneinrichtungen 18', 18" angeordnet.

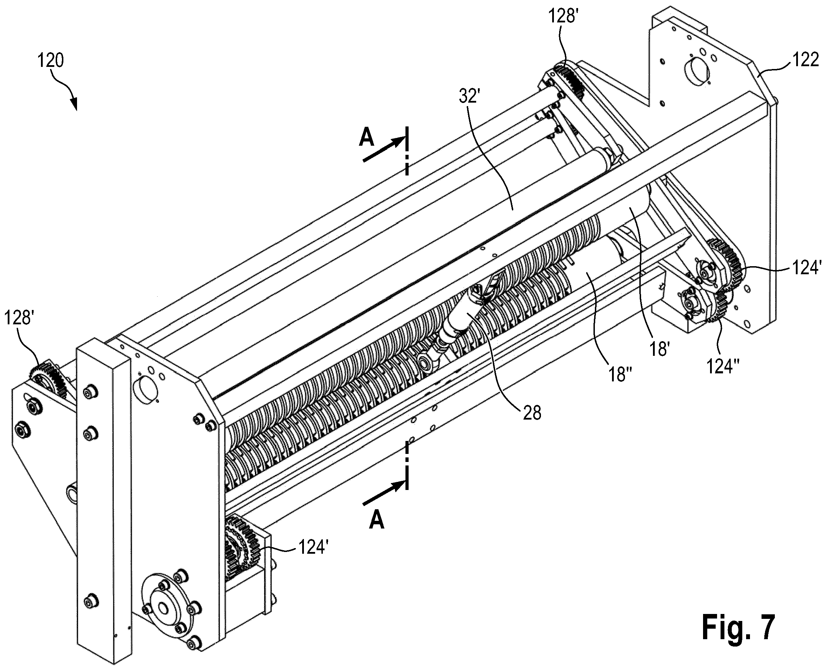

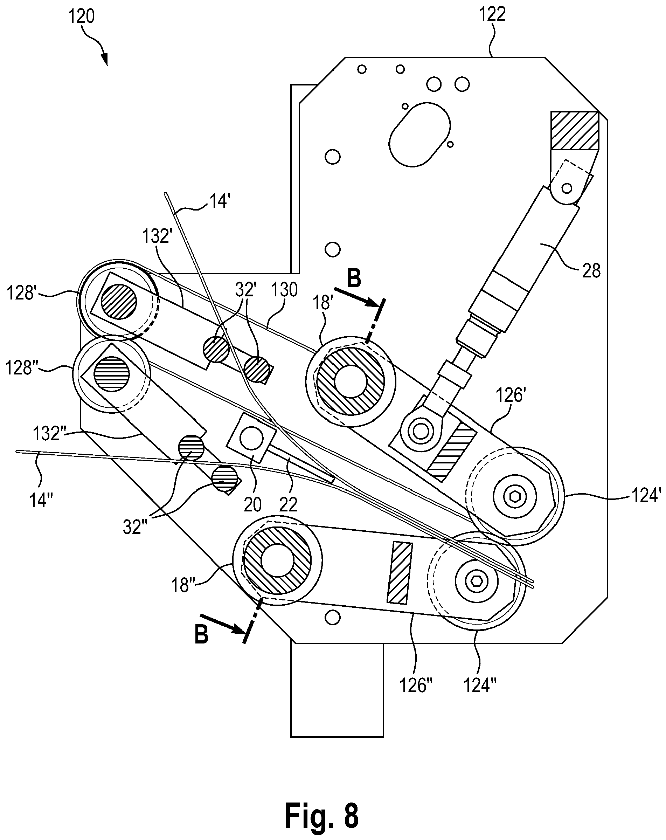

Die Figuren 7 bis 9 zeigen eine dritte Ausführungsform eines Systems 120 zum Erzeugen einer Luftpolsterfolie 12 aus zwei aufeinanderliegenden Folienbahnen 14', 14" im Durchlaufbetrieb, in dem die beiden Folienbahnen 14', 14" in einer Transportrichtung 16 bewegt werden. Das System 120 entspricht im Wesentlichen dem System 10 aus den Figuren 2 und 4. Gleiche Elemente sind mit gleichen Bezugszeichen versehen und werden nicht näher erläutert.

Das System 120 weißt des Weiteren eine Trägerstruktur auf. Die Trägerstruktur 122 trägt die einzelnen Komponenten des Systems 120. Insbesondere trägt die Trägerstruktur 122 die Schweißrolleneinrichtungen 18', 18". Die Bewegungseinrichtung 24 und die Vorspanneinrichtung 26 sind als pneumatischer Zylinder 28 ausgebildet, der ebenfalls an der Trägerstruktur 122 angeordnet ist bzw. von der Trägerstruktur 122 getragen wird.

Die Schweißrolleneinrichtungen 18', 18" sind über einen Aktivierungsmechanismus mit dem pneumatischen Zylinder 28 verbunden. Über diesen Aktivierungsmechanismus sind die beiden Schweißrolleneinrichtungen 18', 18" zwischen der Arbeitsposition und der Ruheposition bewegbar.

Der Aktivierungsmechanismus weist zwei erste Verbindungselemente 126', 126" auf. Je eine Schweißrolleneinrichtung 18', 18" ist an jeweils einer der ersten Verbindungselemente 126', 126" befestigt. Der Aktivierungsmechanismus weist des Weiteren ein erstes Paar von Zahnrädern 124', 124" auf, das ineinander greift. Je eines der ersten Verbindungselemente 126', 126" ist drehfest mit je einem der Zahnräder 124', 124" verbunden. Die Verbindungselemente 126', 126" erstrecken sich im Wesentlichen senkrecht zu den Längsachsen 46 der Schweißrolleneinrichtungen 18', 18" und im wesentlichen senkrecht zu den Drehachsen der entsprechenden Zahnräder 124', 124". Die Schweißrolleneinrichtungen 18', 18" sind somit über den Aktivierungsmechanismus in ihrer Relativbewegung miteinander gekoppelt.

Der pneumatische Zylinder 28 ist über eine Querverstrebung mit einem der ersten Verbindungselemente 126' gekoppelt. Der pneumatische Zylinder 28 ist dazu ausgebildet dieses Verbindungselement 126' um eine Drehachse des entsprechenden Zahnrades 124' zu schwenken, um dadurch eine Relativbewegung der Schweißrolleneinrichtungen 18', 18" zueinander hervorzurufen.

Das System 120 weißt, wie das System 10 aus den Figuren 2 und 4, auch eine Führungseinrichtung zum Führen der Folienbahnen 14', 14" auf. Die Führungseinrichtung weist zwei Paare von Umlenkrollen 32', 32" auf. Jeweils ein paar von Umlenkrollen 32', 32" ist zum Führen jeweils einer Folienbahnen 14', 14" vorgesehen. Eine erste Folienbahn 14', die Oberfolie, verläuft zwischen dem ersten Paar von Umlenkrollen 32' hindurch. Die zweite Folienbahn 14", die Unterfolie, verläuft zwischen dem zweiten Paar von Umlenkrollen 32" hindurch.

Das erste Paar von Umlenkrollen 32' und das zweite Paar von Umlenkrollen 32" ist relativ zueinander bewegbar. Diese Relativbewegung ist mit der Relativbewegung der Schweißrolleneinrichtungen 18',18" gekoppelt. Ein Abstand zwischen den beiden Umlenkrollenpaaren 32', 32" ist in der Arbeitsposition größer als in der Ruheposition. Somit verläuft die Relativbewegung der Umlenkrollenpaare 32', 32" entgegengesetzt zu der Relativbewegung der Schweißrolleneinrichtungen 18', 18". Die Kopplung erfolgt über ein zweites Paar von Zahnrädern 128', 128', welches ebenfalls ineinander greift, wobei eines der zweiten Zahnräder 128 über einen Endlosriemen bzw. Endloskette 130 mit einem der ersten Zahnräder 124' gekoppelt ist.

Des Weiteren weist das System 120 zwei zweite Verbindungselemente 132', 132" auf. Je ein Paar von Umlenkrollen 32', 32" ist an jeweils einem der zweiten Verbindungselemente 132', 132" befestigt. Je eines der zweiten Verbindungselemente 132', 132" ist drehfest mit je einem der Zahnräder 128', 128" verbunden. Die Verbindungselemente 132', 132" erstrecken sich im Wesentlichen senkrecht zu den Drehachsen der korrespondierenden Zahnräder 128', 128".

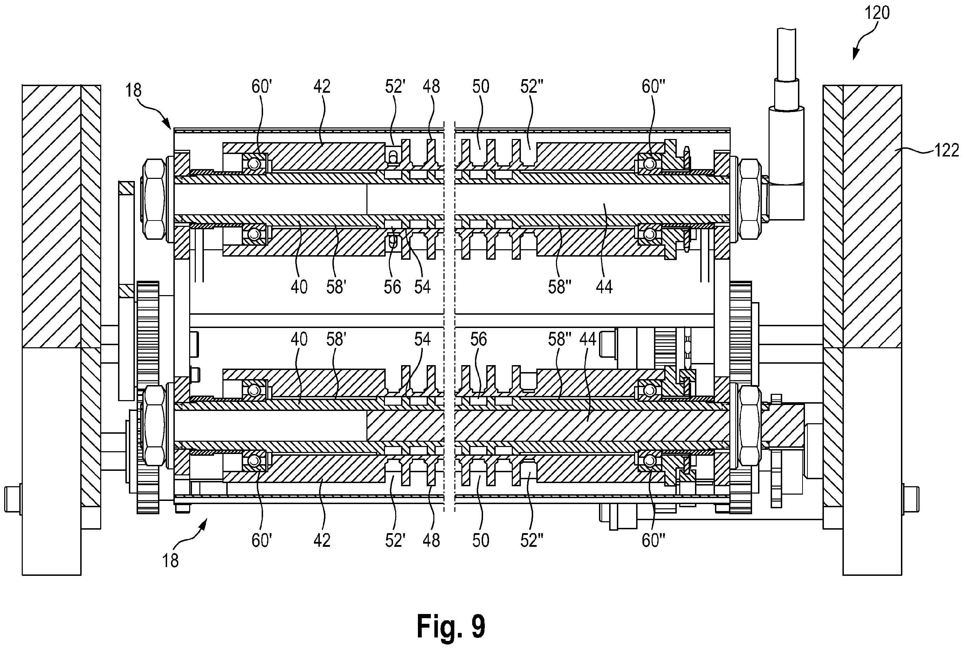

In Fig. 9 sind insbesondere die Anordnung und die Ausbildung der Schweißrolleneinrichtungen 18', 18' genauer dargestellt. Die Schweißrolleneinrichtungen 18', 18" sind im Wesentlichen wie die Schweißrolleneinrichtung 18 aus Figur eins ausgebildet und sind im Wesentlichen wie die Schweißrolleneinrichtungen 18', 18" aus Fig. 4 zueinander angeordnet. Im Unterschied zu der Anordnung aus Fig. 4, sind die Schweißrolleneinrichtungen 18', 18' sind in Fig. 9 in der Ruheposition angeordnet, während die Schweißrolleneinrichtungen 18', 18' in der Darstellung aus Fig. 4 in der Arbeitsposition angeordnet sind.

Ein weiterer Unterschied der Ausführungsform aus Fig. 9 zu der Ausführungsform aus Fig. 4 besteht darin, dass sich jeder äußere Steg 48 nach radial außen hin verjüngt. In anderen Worten weist jeder äußere Steg 48 einen ersten Bereich mit einer ersten Erstreckung bzw. Dicke in der Längsrichtung und einen zweiten Bereich mit einer zweiten Erstreckung bzw. Dicke in der Längsrichtung auf, wobei der zweite Bereich radial weiter außen von dem ersten Bereich angeordnet ist, und wobei die zweite Erstreckung kleiner als die erste Erstreckung ist. In der vorliegenden Ausführungsform der Fig. 9 ist eine Erstreckung in der Längsrichtung an einem radial innen gelegenen Ende der Stege 48 größer als eine Erstreckung in der Längsrichtung an einem radial außen gelegenen Ende der Stege 48. In anderen Worten weisen die Stege 48 einen radial innen gelegenen, dicken Sockel und eine radial außen gelegene, dünne Spitze auf, wobei der Sockel dicker ist als die Spitze. Mittels dieser Anordnung wird zum einen die Stabilität der äußeren Stege 48 verbessert und zum anderen ein effizienter Wärmetransfer zu dem radialer äußeren Ende der Stege 48 ermöglicht.

Jede der Lagereinrichtungen 60', 60" der beiden Schweißrolleneinrichtungen 18', 18" weist ein erstes und ein zweites Kopplungselementen und einen Lagerring auf, der zwischen den beiden Kopplungselementen angeordnet ist. Das erste Kopplungselement ist mit der Innenwelle 40 fest verbunden und das zweite Kopplungselement ist mit der Außenwelle 42 fest verbunden.

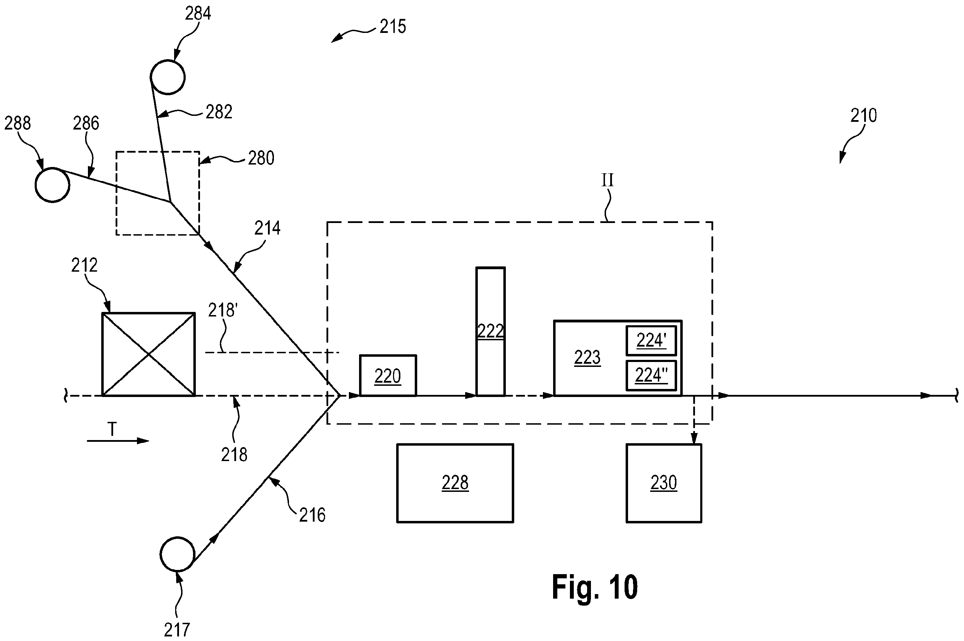

Fig. 10 zeigt eine erste Ausführungsform einer Folienverpackungsmaschine 210 in einer schematischen Ansicht. Die Folienverpackungsmaschine 210 dient dazu, ein Packgut 212 mit einer Umverpackung zu versehen. Dazu wird das Packgut 212 in einer Förderrichtung T durch die Folienverpackungsmaschine 210 bewegt.

Das Packgut 212 wird von der Folienverpackungsmaschine 210 mit einer ersten, oberen Folie 214, die von einer oberen Folienzuführung 215 abgewickelt wird, und einer zweiten, unteren Folie 216, die von einer unteren Folienzuführung 217 abgewickelt wird, eingehüllt. Diese Art der Einhüllung entspricht dem Prinzip einer sog. Serienpackmaschine, so dass dementsprechend die vorliegende Erfindung am Beispiel einer als Serienpackmaschine ausgestalteten Folienverpackungsmaschine 210 erläutert wird.

Die Folienverpackungsmaschine 210 weist eine erste Folienzuführeinrichtung 215 auf, die dazu ausgebildet ist, die obere Folie 214 einer Quertrennschweißvorrichtung 222 zuzuführen. Die Folienverpackungsmaschine 210 weist eine zweite Folienzuführeinrichtung 217 auf, die dazu ausgebildet ist, die untere Folie 216 der Quertrennschweißvorrichtung 222 zuzuführen.

Die zweite Folienzuführeinrichtung 217 ist als Rolle ausgebildet, auf der die untere Folie 216 aufgewickelt ist. Zum Zuführen wird dann die untere Folie 216 von dieser Rolle abgewickelt.

Die obere Folie 214 ist als Luftpolsterfolie ausgebildet, die im Durchlaufbetrieb erzeugt wird. Zum Erzeugen der Luftpolsterfolie weist die erste Folienzuführeinrichtung 215 ein erstes Luftpolsterfolienerzeugungssystem 280 auf. Das erste Luftpolsterfolienerzeugungssystem 280 kann entsprechend den Systemen 10, 10' oder 120 aus Fig. 2, 3 und 7-9 ausgebildet sein. Das erste Luftpolsterfolienerzeugungssystem 280 weist zumindest eine Schweißrolleneinrichtung 18 auf, die dazu ausgebildet ist, die Luftpolsterfolie aus zwei aufeinanderliegenden Folienbahnen 282, 286 im Durchlaufbetrieb zu erzeugen.

Die Folienzuführeinrichtung 215 weist des Weiteren je eine Folienbahnzuführeinrichtung 284, 288 für je eine der beiden Folienbahnen 282, 286 auf. Jede Folienbahnzuführeinrichtung 284, 288 ist dazu ausgebildet, die entsprechende Folienbahn 282, 286 der Schweißrolleneinrichtung 18 des ersten Luftpolsterfolienerzeugungssystem 280 zuzuführen. Jede Folienbahnzuführeinrichtung 284, 288 ist als Rolle ausgebildet, auf der die entsprechende Folienbahn 282, 286 aufgewickelt ist. Zum Zuführen wird dann die jeweilige Folienbahn 282, 286 von der entsprechenden Rolle abgewickelt.

Die obere Folie 214 und die untere Folie 216 laufen in einer Folienführungsebene 218 zusammen. Das Packgut 212 fährt somit in die aufeinander zulaufende obere Folie 214 und untere Folie 216 ein, wobei die Folien 214, 216 zunächst einer Querstraffung unterzogen werden können. Dazu kann eine Querstraffungsvorrichtung 220 vorgesehen sein.

Das umhüllte Packgut 212 mit den Folien 214, 216 erreicht dann eine Quertrennschweißvorrichtung 222. Die Quertrennschweißvorrichtung 222 schweißt die Folien 214, 216 quer zu der Förderrichtung T zusammen und durchtrennt die Folien 214, 216 zumindest teilweise, so dass das Packgut 212 entlang der Schweißnaht keinen Kontakt mehr zu dem ihm vorhergehenden Packgut hat. Die in Förderrichtung T weisende Seite des Packguts 212 ist somit bereits verschweißt.

Anschließend fährt das Packgut durch ein Längstrennschweißsystem 223, das dazu vorgesehen ist, die Folien 214, 216 seitlich des Packguts 212 zusammenzuschweißen und einen seitlichen Folienüberstand abzutrennen. Wenn die Folienverpackungsmaschine als eine Serienpackmaschine ausgebildet ist, weist das Längstrennschweißsystem 223 zwei Längstrennschweißvorrichtungen 224. 224' auf, die die obere Folie 214 und die untere Folie 216 an entgegensetzten Seiten der Folien 214, 216 in Förderrichtung trennen und miteinander verschweißen bzw. trennschweißen. Beispielsweise in der Formschultermaschine, die mit einem Folienhalbschlauch arbeitet, weist das Längstrennschweißsystem lediglich eine Längstrennschweißvorrichtung auf. Schließlich wird die entgegengesetzt zu der Förderrichtung T weisende Seite des Packguts 212 erneut von der Quertrennschweißvorrichtung 222 verschweißt und abgetrennt. Dieser Vorgang stellt dabei gleichzeitig die Abtrennung und Verschweißung der in die Förderrichtung T weisenden Seite eines nachfolgenden Packguts dar. Das Packgut 212 ist nun an allen vier Seiten verschweißt und beschnitten, so dass das Packgut 212 von einer Folienumhüllung komplett umgeben ist.

Die Abfolge der Quertrennschweißvorrichtung 222, des Längstrennschweißsystems 224 und der Querstraffungsvorrichtung 220 ist lediglich beispielhaft in einer häufig auftretenden Konfiguration wiedergegeben, wie sie beispielsweise in einer Serienpackmaschine auftritt. Die Abfolge dieser Einrichtungen kann auch anders sein, bspw. kann vorgesehen sein, die Quertrennschweißvorrichtung 222 nach dem Längstrennschweißsystem 224 anzuordnen. Auch können Elemente der Querstraffungsvorrichtung 220 zwischen oder in der Quertrennschweißvorrichtung 222 oder dem Längstrennschweißsystem 224 vorgesehen sein.

Des Weiteren weist die Folienverpackungsmaschine 210 in der Regel Verstelleinrichtungen 228 auf, um die Folienverpackungsmaschine 210 an Packgüter unterschiedlicher Breite, Länge und Höhe einstellen zu können. Auch die Geschwindigkeit des Verpackungsvorgangs kann mittels der Verstelleinrichtungen 228 eingestellt werden. Des Weiteren sind Möglichkeiten vorgesehen, die Folienverpackungsmaschine 210 auf unterschiedliche Folientypen, die bspw. in Dicke, Reißfestigkeit und Oberflächenbeschaffenheit unterschiedlich sein können, einzustellen.

Letztlich ist in der Regel eine Folienrückführung 230 vorgesehen, die von der Längstrennschweißvorrichtung 224 abgetrenntes überschüssiges Folienmaterial sammelt, um es bspw. einem Recyclingprozess zuzuführen.

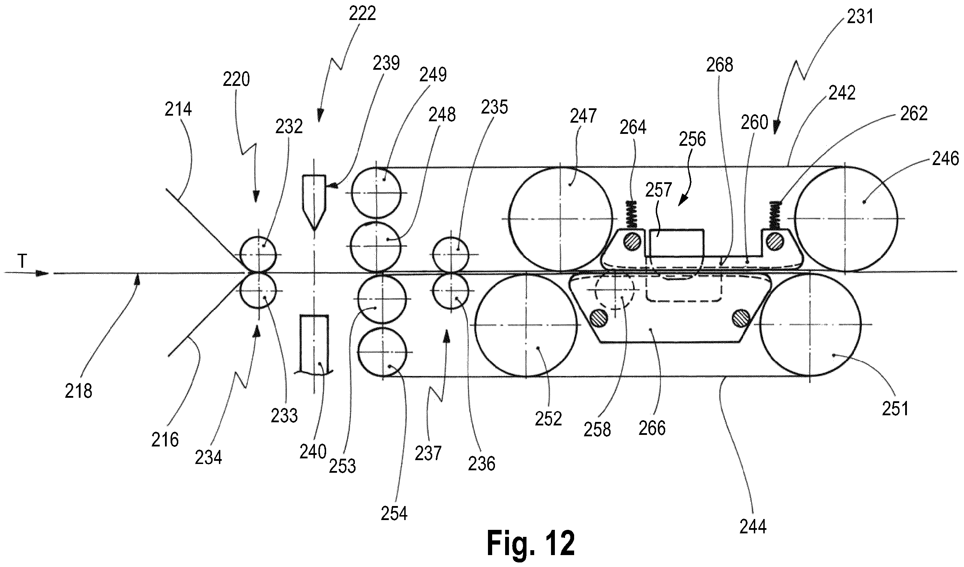

Mit II ist ein Ausschnitt der Folienverpackungsmaschine 210 bezeichnet, der in Fig. 12 in einer Detailansicht dargestellt ist.

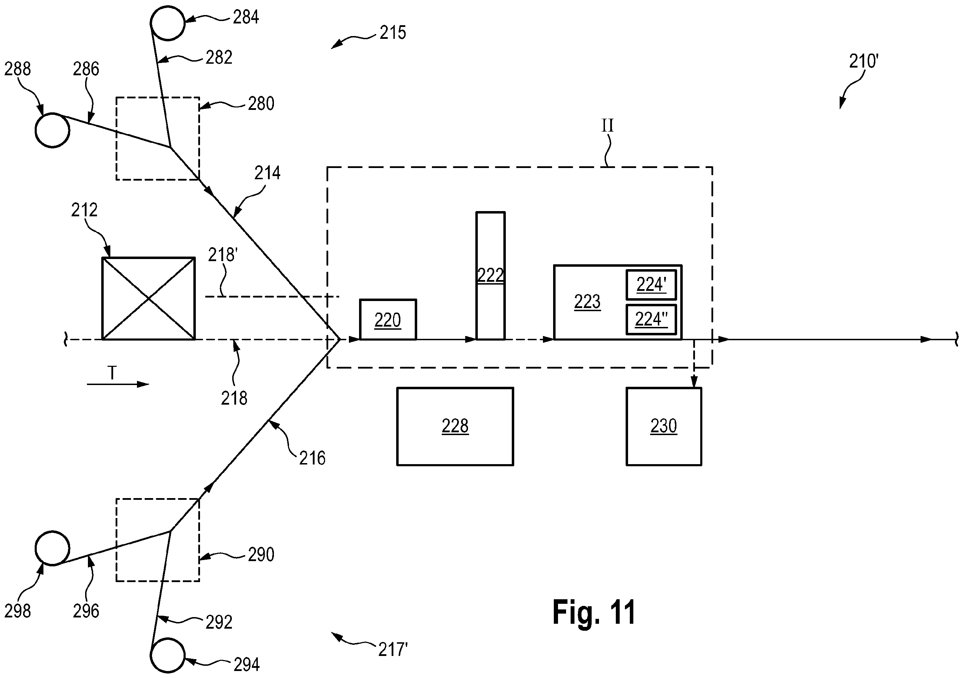

Fig. 11 zeigt ebenfalls eine zweite Ausführungsform einer Folienverpackungsmaschine 210' in einer schematischen Ansicht. Die Folienverpackungsmaschine 210' weist im Wesentlichen denselben Aufbau auf, wie die Folienverpackungsmaschine 210 der ersten Ausführungsform aus Fig. 10. Gleiche Elemente sind mit gleichen Bezugszeichen gekennzeichnet und werden nicht weiter erläutert.

Der Unterschied der Folienverpackungsmaschine 210' aus Fig. 11 zu der Folienverpackungsmaschine 210 aus Fig. 10 besteht darin, dass die untere Folie 216 ebenfalls als eine Luftpolsterfolie ausgebildet ist, die im Durchlaufbetrieb erzeugt wird.

Zum Erzeugen der Luftpolsterfolie weist die zweite Folienzuführeinrichtung 217' ein zweites Luftpolsterfolienerzeugungssystem 290 auf. Das zweite Luftpolsterfolienerzeugungssystem 290 kann entsprechend den Systemen 10, 10' oder 120 aus Fig. 2, 3 und 7-9 ausgebildet sein. Das zweite Luftpolsterfolienerzeugungssystem 290 weist zumindest eine Schweißrolleneinrichtung 18 auf, die dazu ausgebildet ist, die Luftpolsterfolie aus zwei aufeinanderliegenden Folienbahnen 292, 296 im Durchlaufbetrieb zu erzeugen.

Die Folienzuführeinrichtung 217' weist des Weiteren je eine Folienbahnzuführeinrichtung 294, 298 für je eine der beiden Folienbahnen 292, 296 auf. Jede Folienbahnzuführeinrichtung 294, 298 ist dazu ausgebildet, die entsprechende Folienbahn 292, 296 der Schweißrolleneinrichtung 18 des zweiten Luftpolsterfolienerzeugungssystem 290 zuzuführen. Jede Folienbahnzuführeinrichtung 294, 298 ist als Rolle ausgebildet, auf der die entsprechende Folienbahn 292, 296 aufgewickelt ist. Zum Zuführen wird dann die jeweilige Folienbahn 292, 296 von der entsprechenden Rolle abgewickelt.

Fig. 12 zeigt eine Detailansicht des Ausschnitts II aus den Fig. 10 und 11. Das Längstrennschweißsystem 223 kann eine oder zwei derartiger Längstrennschweißvorrichtungen 224 aufweisen. Die Längstrennschweißvorrichtung 223 ist in dem dargestellten Beispiel nach der Quertrennschweißvorrichtung 222 angeordnet. Vor der Quertrennschweißvorrichtung 222 ist die Querstraffungsvorrichtung 220 angeordnet. Die Querstraffungsvorrichtung 220 weist zwei Räder 232, 233 auf, die die Folien 214, 216 zwischen sich entlang der Folienführungsebene 218 einziehen. Die Räder 232, 233 bilden ein erstes Räderpaar 234. Eine Drehachse der Räder 232, 233 relativ zu der Förderrichtung T kann nach außen gewinkelt sein, so dass eine entsprechende Querstraffung erreicht wird.

Die Räder 232, 233 stellen insbesondere eine optimale Querstraffung für den Quertrennschweißvorgang mittels der Quertrennschweißvorrichtung 222 sicher. Entsprechend ist in der Längstrennschweißvorrichtung 224 ein aus zwei Rädern 235, 236 bestehendes Räderpaar 237 vorgesehen, das dieselbe Funktion wie das erste Räderpaar 234 mit den Rädern 232, 233 erfüllt. Das Räderpaar 237 stellt so eine optimale Querstraffung der Folien 214, 216 für den Längstrennschweißvorgang bereit.

Der Quertrennschweißvorgang mittels der Quertrennschweißvorrichtung 222 wird von einem Oberstempel 239 und einem Unterstempel 240 bewirkt. Der Oberstempel 239 weist ein Schweißmesser auf, das gegen den Unterstempel 240 gedrückt wird und die Folien 214, 216 miteinander verschweißt und diese durchtrennt. Dazu werden der Oberstempel 239 und der Unterstempel 240 aufeinander zubewegt, so dass sie sich im Bereich der Folienführungsebene 218 treffen. Der Schweißvorgang wird in der Regel mittels einer erhitzten Schneidklinge erzielt. Als Alternative zu der Schneidklinge kann auch ein beheizter Draht verwendet werden. Der Draht wird dabei nicht ständig auf einer hohen Temperatur gehalten, sondern nur impulsbeheizt. Der Draht kann sich dann bei geöffneten Stempeln 239, 240 wieder abkühlen, was zu einem besseren Schweißergebnis führen kann.

Die Quertrennschweißvorrichtung 222 kann vorzugsweise als mitlaufende Quertrennschweißvorrichtung 222 ausgebildet sein. Eine mitlaufende Quertrennschweißvorrichtung 222 ermöglicht einen vollständig kontinuierlichen Betrieb der Folienverpackungsmaschine 210, 210'. Eine Ausgestaltung einer Quertrennschweißvorrichtung als eine mitlaufende Quertrennschweißvorrichtung ist beispielsweise in der Druckschrift DE 10 2012 103 352 A1 gezeigt.

Zum Transport und zur Fixierung der Folien 214, 216 sind in der Längstrennschweißvorrichtung zwei Endlosriemen 242, 244 vorgesehen, die die Folien 214, 216 in der Folienführungsebene 218 zwischen sich einziehen und klemmen und die Folien 214, 216 und das Packgut 212 fördern. Jeweils ein Endlosriemen 242, 244 ist somit auf jeder Seite der Folienführungsebene 218 angeordnet.

Der Endlosriemen 242 läuft um drei Rollen 246, 248, 249 um. Der Endlosriemen 244 läuft um drei Rollen 251, 253, 254 um.

Die Laufbahnen der Rollen 246 und 247 sowie 251 und 252 weisen denselben Durchmesser auf. Im Bereich den Endlosriemens 242 weisen die Rollen 247 und 252 jedoch bereits wieder einen geringeren Durchmesser auf, so dass die Endlosriemen 242, 244 nicht über die Rollen 247 und 252 laufen.

An der Stelle, an der die Folien 214, 216 von den Endlosriemen 242, 244 zwischen sich eingezogen werden, befinden sich die Rollen 248 und 253. Jeweils vertikal versetzt zu den Rollen 248 und 253 sind Rollen 249 bzw. 254 vorgesehen. Die Rollen 248 und 249 bzw. 253 und 254 sind relativ zueinander verschiebbar, bspw. indem die Rollen 249 und 254 in einem sich vertikal erstreckenden Langloch (nicht dargestellt) befestigt sind. Auf diese Weise kann die Spannung der Endlosriemen 242, 244 reguliert werden, insbesondere kann so auch ein leichtes Austauschen der Endlosriemen 242, 244 erreicht werden.

Die Folien 214, 216 werden entlang der Folienführungsebene 218 von den Endlosriemen 242, 244 gefördert und durch eine Trennschweißeinrichtung 256 geführt. Im vorliegenden Fall ist die Trennschweißeinrichtung 256 ein widerstandsbeheiztes Schweißmesser, so dass das Schweißmesser 256 die Folien 214, 216 durchtrennt und an ihrem Ende verschmelzt bzw. verschweißt.

Um der Trennschweißeinrichtung 256 die Folien 214, 216 möglichst faltenfrei zuzuführen, ist vor der Trennschweißeinrichtung 256 eine Spannrolle 258 vorgesehen, die auf der der Trennschweißeinrichtung 256 gegenüberliegenden Seite der Folienführungsebene 218 angeordnet ist und diese durchdringt. Durch die Spannrolle 258 werden die Folien 214, 216 kurzzeitig angehoben und weitestgehend faltenfrei gezogen. Selbst wenn eine Falte nicht durch die Spannrolle 258 entfernt werden könnte, wird so zumindest sichergestellt, dass auch die jeweils andere Folie 214, 216 sich entsprechend in die Falte legt, so dass die Folien 214, 216 ohne Lufteinschlüsse aufeinanderliegen, wenn sie verschweißt werden.

Des Weiteren ist eine Stützschiene 260 vorgesehen, die dazu vorgesehen ist, die Folien 214, 216 im Bereich der Trennschweißeinrichtung 256 fest und glatt aufeinander zu pressen. Die Anpresskraft der Stützschiene 260 wird mittels geeigneter Federelemente 262, 264 erzeugt. Diese drücken die Stützschiene 260 auf eine gegenüberliegende Stützschiene 266.

Die Trennschweißeinrichtung 56 ist als Trennschweißmesser 57 ausgebildet. Das Trennschweißmesser 57 ist ein widerstandsbeheiztes Trennschweißmesser 57. Das Trennschweißmesser 57 ist zwischen einer Betriebsposition und einer Warteposition um einen Schwenkpunkt 68 verschwenkbar. In der Betriebsposition ist das Trennschweißmesser 57 in die Folienführungsebene 18 hineinbewegt. Dies bedeutet, dass die Folienführungsebene 18 sich entlang des Trennschweißmessers 57 erstreckt. In Fig. 12 ist das Trennschweißmesser 57 in der Betriebsposition angeordnet.

Die Warteposition ist gegenüber der Betriebsposition um einen Schwenkwinkel verschwenkt. Der Schwenkpunkt 68 liegt dabei außerhalb des Trennschweißmessers 57. Auf diese Weise kann mittels eines Verschwenkens um den Schwenkpunkt 68 über den Schwenkwinkel das Trennschweißmesser 57 aus der Folienführungsebene 18 herausbewegt werden. In der Warteposition ist das Trennschweißmesser 57 daher nicht mehr in der Folienführungsebene 18 angeordnet ist.

Der Schwenkpunkt 68 kann auf der Folienführungsebene 18 liegen. Dies ist jedoch nicht zwingend der Fall. Der Schwenkpunkt 68 kann beliebig angeordnet sein, um mittels einer Schwenkbewegung das Trennschweißmesser 57 aus der Betriebsposition Warteposition zu bewegen.

Zum Vorspannen des Trennschweißmessers 57 in die Warteposition kann beispielsweise eine Federeinrichtung, vorgesehen sein. Zur Bereitstellung der Bewegung des Trennschweißmessers 57 von der Warteposition in die Betriebsposition kann eine Aktuierungseinrichtung vorgesehen sein. Insbesondere kann diese beispielsweise durch einen Elektromagneten bereitgestellt sein. Der Elektromagnet wirkt entgegen der Federkraft der Federeinrichtung, die das Trennschweißmesser 57 in die Warteposition vorspannt. Durch Bestromen beispielsweise des Elektromagneten kann dann das Trennschweißmesser 57 in die Betriebsposition gedrückt bzw. gezogen werden.

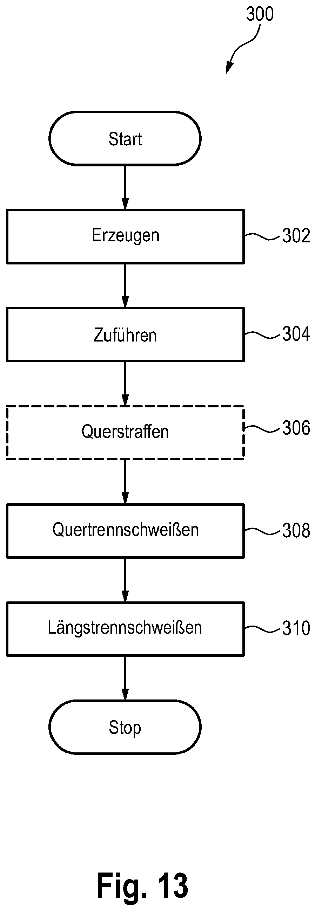

Fig. 13 zeigt eine Ausführungsform eines Verfahrens 300 zum Verpacken eines Packguts 212. Das Verfahren 300 kann vorzugsweise mittels einer der Folienverpackungsmaschine 210, 210' aus den Figuren 10 bzw. 11 durchgeführt werden. In dem Verfahren 300 wird das Packgut 212 mittels einer Fördereinrichtung in einer Förderrichtung T gefördert.

In einem ersten Schritt 302 des Verfahrens 300 wird die erste Folie 214 als Luftpolsterfolie aus zwei aufeinanderliegenden Folienbahnen 282, 286 im Durchlaufbetrieb mittels einer Schweißrolleneinrichtung 18 eines ersten Luftpolsterfolienerzeugungssystems 280.

Vorzugsweise weist die zweite Folienzuführeinrichtung 217' ein zweites Luftpolsterfolienerzeugungssystem 290 aufweist, wie dies beispielsweise in Fig. 11 dargestellt ist. Dabei weist der Schritts des Erzeugens 302 des Weiteren auf, dass die zweite Folie 216 als Luftpolsterfolie aus zwei aufeinanderliegenden Folienbahnen 292, 296 im Durchlaufbetrieb mittels einer Schweißrolleneinrichtung 18 des zweiten Luftpolsterfolienerzeugungssystem 290 erzeugt wird.

Weiter vorzugsweise können die Folienbahnen 282, 286, 292, 296 jedes Luftpolsterfolienerzeugungssystems 280, 290 mittels zweier Folienbahnzuführungen 284, 288, 294, 298 des entsprechenden Luftpolsterfolienerzeugungssystems 280, 290 der Schweißrolleneinrichtung 18 des entsprechenden Luftpolsterfolienerzeugungssystems 280, 290 zugeführt werden, wie beispielsweise in den Figuren 10 und 11 dargestellt.

Weiter vorzugsweise können die Folienbahnen 282, 286, 292, 296 jedes Luftpolsterfolienerzeugungssystems 280, 290 jeweils in einer Transportrichtung 16 bewegt werden, wobei in dem Schritt des Erzeugens 302 die aufeinanderliegenden Folienbahnen 14', 14" mittels der entsprechenden Schweißrolleneinrichtung 18 des jeweiligen Luftpolsterfolienerzeugungssystems 280, 290 miteinander verschweißt werden, so dass in der Transportrichtung 16 verlaufende Luftschläuche erzeugt werden, die die Luftpolsterfolie ausbilden.

In einem weiteren Schritt 304 des Verfahrens 300 wird die Folie 214 mittels einer ersten Folienzuführeinrichtung 215 und die zweite Folie 216 mittels einer zweiten Folienzuführeinrichtung 217, 217' in die Quertrennschweißvorrichtung 222 zugeführt, wobei die erste Folienzuführeinrichtung 215 das erste Luftpolsterfolienerzeugungssystem 280 aufweist.

In einem weiteren, optionalen Schritt 306 des Verfahrens 300 wird kann vorgesehen sein, dass die beiden Folien 214, 216 mittels einer Querstraffungsvorrichtung 220 quergestrafft werden.

In einem weiteren Schritt 308 des Verfahrens 300 werden die erste und die zweite Folie 214, 216 quer zu der Förderrichtung T mittels der Quertrennschweißvorrichtung 222 miteinander verschweißt bzw. quertrenngeschweißt.

Vorzugsweise kann in dem Schritt des Quertrennschweißens 308 vorgesehen sein, dass durch das Verschweißen der Folien 214, 216 quer zu der Förderrichtung T mittels der Quertrennschweißvorrichtung 222 die erzeugten Luftschläuche der jeweiligen Luftpolsterfolie in der Transportrichtung 16 verschlossen werden.

In einem weiteren Schritt 310 des Verfahrens 300 werden die erste und die zweite Folie 214, 216 parallel zu der Förderrichtung T an zwei gegenüberliegenden Längsseiten mittels einer ersten und einer zweiten Längstrennschweißvorrichtung 224', 224" verschweißt bzw. längstrenngeschweißt.

## Patentansprüche

1. Folienverpackungsmaschine (210, 210') zum Verpacken eines Packguts (212) mit einer aus einer ersten Folie (214) und einer zweiten Folie (216) erzeugten Umverpackung, wobei die Folienverpackungsmaschine (210, 210') eine Fördereinrichtung zum Fördern des Packguts (212) in einer Förderrichtung (T), eine Quertrennschweißvorrichtung (222) zum Verschweißen der Folien (214, 216) quer zu der Förderrichtung (T), eine erste Folienzuführeinrichtung (215) zum Zuführen der ersten Folie (214) in die Quertrennschweißvorrichtung (222), eine zweite Folienzuführeinrichtung (217) zum Zuführen der zweiten Folie (216) in die Quertrennschweißvorrichtung (222), und eine erste und eine zweite Längstrennschweißvorrichtung (224', 224") zum Verschweißen der Folien (214, 216) parallel zu der Förderrichtung (T) an zwei gegenüberliegenden Längsseiten aufweist, **dadurch gekennzeichnet, dass** die erste und/oder die zweite Folienzuführeinrichtung (215, 217) jeweils ein Luftpolsterfolienerzeugungssystem (280, 290) zum Erzeugen der jeweiligen ersten und/oder zweiten Folie (214, 216) als eine Luftpolsterfolie aufweist, wobei jedes Luftpolsterfolienerzeugungssystem (280, 290) eine Schweißrolleneinrichtung (18) aufweist, die dazu ausgebildet ist, die Luftpolsterfolie aus zwei aufeinanderliegenden Folienbahnen (282, 286; 292, 296) im Durchlaufbetrieb zu erzeugen.

2. Folienverpackungsmaschine (210, 210') nach Anspruch 1, **dadurch gekennzeichnet, dass** jede ein Luftpolsterfolienerzeugungssystem (280, 290) aufweisende Folienzuführeinrichtung (215, 217) des Weiteren jeweils zwei Folienbahnzuführungen (284, 288; 294, 298) zum Zuführen der Folienbahnen (282, 286; 292, 296) in das jeweilige Luftpolsterfolienerzeugungssystem (280, 290) aufweist.

3. Folienverpackungsmaschine (210, 210') nach Anspruch 1 oder 2, **dadurch gekennzeichnet, dass** die Folienbahnen (282, 286, 292, 296) jedes Luftpolsterfolienerzeugungssystems (280, 290) jeweils in einer Transportrichtung (16) bewegt werden, wobei jedes Luftpolsterfolienerzeugungssystem (280, 290) mittels der entsprechenden Schweißrolleneinrichtung (18) dazu ausgebildet ist, die aufeinanderliegenden Folienbahnen (282, 286, 292, 296) miteinander zu verschweißen, so dass in der Transportrichtung (16) verlaufende Luftschläuche erzeugt werden, die die Luftpolsterfolie ausbilden.

4. Folienverpackungsmaschine (210, 210') nach Anspruch 3, **dadurch gekennzeichnet, dass** die Quertrennschweißvorrichtung (222) dazu ausgebildet ist, durch das Verschweißen der Folien (214, 216) quer zu der Förderrichtung (T) die Luftschläuche der jeweiligen Luftpolsterfolie in der Transportrichtung (16) zu verschließen.

5. Folienverpackungsmaschine (210, 210') nach einem der Ansprüche 1 bis 4, **dadurch gekennzeichnet, dass** jede Schweißrolleneinrichtung (18) jedes Luftpolsterfolienerzeugungssystems (280, 290) eine Innenwelle (40), eine um die Innenwelle (40) angeordnete Außenwelle (42) und eine Heizeinrichtung (44) zum Beheizen der Innenwelle (40) aufweist, wobei die Außenwelle (42) und die Innenwelle (40) eine gemeinsame Längsachse (46) aufweisen, wobei sich die Längsachse (46) in einer Längsrichtung erstreckt, wobei die Innenwelle (40) feststehend angeordnet ist, wobei die Außenwelle (42) um die Längsachse (46) in einer Drehrichtung drehbar gelagert ist, wobei die Außenwelle (42) eine Mehrzahl von äußeren Stegen (48) aufweist, die sich bezüglich der Längsachse (46) in einer radialen Richtung nach außen hin erstrecken, wobei die äußeren Stege (48) in der Längsrichtung voneinander beabstandet sind, wobei die Außenwelle (42) zwischen jeweils zwei benachbarten, äußeren Stegen (48) jeweils eine äußere Aussparung (50) aufweist.

6. Folienverpackungsmaschine (210, 210') nach Anspruch 5, **dadurch gekennzeichnet, dass** die Folienbahnen (282, 286, 292, 296) jedes Luftpolsterfolienerzeugungssystems (280, 290) jeweils in einer Transportrichtung (T) bewegt werden, wobei jedes Luftpolsterfolienerzeugungssystem (280, 290) jeweils zwei Schweißrolleneinrichtungen (18', 18") aufweist, wobei die Schweißrolleneinrichtungen (18', 18") auf gegenüberliegenden Seiten der entsprechenden Folienbahnen (14', 14") angeordnet sind, so dass die Folienbahnen (14', 14") zwischen den Schweißrolleneinrichtungen (18', 18") in der Transportrichtung (16) hindurchlaufen, wobei die Längsachsen (46) der beiden Innenwellen (40) der Schweißrolleneinrichtungen (18', 18") parallel zueinander und senkrecht zu der Transportrichtung (16) angeordnet sind, wobei jeweils zwei äußere Stege (48) der Schweißrolleneinrichtungen (18', 18") gegenüberliegend zueinander angeordnet sind, insbesondere so dass sie die Folienbahnen (14', 14") zwischen sich verschweißen.

7. Folienverpackungsmaschine (210, 210') nach einem der Ansprüche 1 bis 6, **dadurch gekennzeichnet, dass** die Folienbahnen (282, 286, 292, 296) jedes Luftpolsterfolienerzeugungssystems (280, 290) jeweils in einer Transportrichtung (T) bewegt werden, wobei jedes Luftpolsterfolienerzeugungssystems (280, 290) des Weiteren eine Düseneinrichtung (20) zum Erzeugen eines Luftstroms zwischen den Folienbahnen (14', 14") in der Transportrichtung (16) aufweist, und wobei die Düseneinrichtung (20) zwischen den Folienbahnen (14', 14") angeordnet ist.

8. Folienverpackungsmaschine (210, 210') nach Anspruch 7, **dadurch gekennzeichnet, dass** die Düseneinrichtung (20) eine Mehrzahl von Düsen (22) aufweist, wobei die Düsen (22) in der Längsrichtung derart angeordnet sind, dass jeweils eine Düse (22) in der Transportrichtung (16) korrespondierend, insbesondere fluchtend, mit jeweils einer äußeren Aussparung (50) der Schweißrolleneinrichtung (18) angeordnet ist, insbesondere wobei sich jede Düse (22) im Betrieb zumindest teilweise in die entsprechende Aussparung (50) hinein oder durch die entsprechende Aussparung (50) hindurch erstreckt.

9. Folienverpackungsmaschine (210, 210') nach einem der Ansprüche 1 bis 8, **dadurch gekennzeichnet, dass** die erste Folie (214) eine obere Folie ist und die zweite Folie (216) eine untere Folie ist.

10. Verfahren (300) zum Verpacken eines Packguts (212) mit einer aus einer ersten Folie (214) und einer zweiten Folie (216) erzeugten Umverpackung, wobei das Packgut (212) mittels einer Fördereinrichtung in einer Förderrichtung (T) gefördert wird, wobei das Verfahren (300) die folgenden Schritte aufweist:
- Erzeugen (302) der ersten Folie (214) als Luftpolsterfolie aus zwei aufeinanderliegenden Folienbahnen (282, 286) im Durchlaufbetrieb mittels einer Schweißrolleneinrichtung (18) eines ersten Luftpolsterfolienerzeugungssystems (280);
- Zuführen (304) der ersten Folie (214) in eine Quertrennschweißvorrichtung (222) mittels einer ersten Folienzuführeinrichtung (215) und Zuführen der zweiten Folie (216) mittels einer zweiten Folienzuführeinrichtung (217, 217') in die Quertrennschweißvorrichtung (222), wobei die erste Folienzuführeinrichtung (215) das erste Luftpolsterfolienerzeugungssystem (280) aufweist;
- Quertrennschweißen (308) der ersten und zweiten Folie (214, 216) quer zu der Förderrichtung (T) mittels der Quertrennschweißvorrichtung (222);
- Längstrennschweißen (310) der ersten und zweiten Folie (214, 216) parallel zu der Förderrichtung (T) an zwei gegenüberliegenden Längsseiten mittels einer ersten und einer zweiten Längstrennschweißvorrichtung (224', 224").

11. Verfahren (300) nach Anspruch 10, **dadurch gekennzeichnet, dass** die zweite Folienzuführeinrichtung (217') ein zweites Luftpolsterfolienerzeugungssystem (290) aufweist, wobei der Schritts des Erzeugens (302) des Weiteren aufweist, dass die zweite Folie (216) als Luftpolsterfolie aus zwei aufeinanderliegenden Folienbahnen (292, 296) im Durchlaufbetrieb mittels einer Schweißrolleneinrichtung (18) des zweiten Luftpolsterfolienerzeugungssystem (290) erzeugt wird.

12. Verfahren (300) nach Anspruch 10 oder 11, **dadurch gekennzeichnet, dass** die Folienbahnen (282, 286, 292, 296) jedes Luftpolsterfolienerzeugungssystems (280, 290) mittels zweier Folienbahnzuführungen (284, 288, 294, 298) des entsprechenden Luftpolsterfolienerzeugungssystems (280, 290) der Schweißrolleneinrichtung (18) des entsprechenden Luftpolsterfolienerzeugungssystems (280, 290) zugeführt werden.

13. Verfahren (300) nach einem der Ansprüche 10 bis 12, **dadurch gekennzeichnet, dass** die Folienbahnen (282, 286, 292, 296) jedes Luftpolsterfolienerzeugungssystems (280, 290) jeweils in einer Transportrichtung (16) bewegt werden, wobei in dem Schritt des Erzeugens (302) die aufeinanderliegenden Folienbahnen (14', 14") mittels der entsprechenden Schweißrolleneinrichtung (18) des jeweiligen Luftpolsterfolienerzeugungssystems (280, 290) miteinander verschweißt werden, so dass in der Transportrichtung (16) verlaufende Luftschläuche erzeugt werden, die die Luftpolsterfolie ausbilden.

14. Verfahren (300) nach Anspruch 13, **dadurch gekennzeichnet, dass** in dem Schritt des Quertrennschweißens (308) durch das Verschweißen der Folien (214, 216) quer zu der Förderrichtung (T) mittels der Quertrennschweißvorrichtung (222) die Luftschläuche der jeweiligen Luftpolsterfolie in der Transportrichtung (16) verschlossen werden.

15. Verfahren (300) nach einem der Ansprüche 10 bis 14, **dadurch gekennzeichnet, dass** die erste Folie (214) eine obere Folie ist und die zweite Folie (216) eine untere Folie ist.
